# EUROPÄISCHE PATENTSCHRIFT

(11) **EP 3 673 623 B1**
(45) Veröffentlichungstag und Bekanntmachung des Hinweises auf die Patenterteilung: **17.03.2021**
(21) Anmeldenummer: 18800489.9
(22) Anmeldetag: 22.10.2018
(51) Int. Cl.: H04L 12/28

(54) **VERFAHREN UND STEUERSYSTEM ZUM STEUERN UND/ODER ÜBERWACHEN VON GERÄTEN**
METHOD AND CONTROL SYSTEM FOR CONTROLLING AND/OR SUPERVISING OF DEVICES
PROCÉDÉ ET SYSTÈME DE CONTRÔLE POUR LE CONTRÔLE ET/OU LA SURVEILLANCE D'APPAREILS

(30) Priorität: 23.10.2017 EP 17197791; 23.10.2017 EP 18000033; 22.01.2018 EP 18152750; 22.01.2018 EP 18000379; 16.03.2018 EP 18162189; 18.04.2018 EP 18167956; 18.04.2018 WO PCT/EP2018/059891; 27.04.2018 WO PCT/EP2018/060900; 29.05.2018 EP 18174922; 02.08.2018 WO PCT/EP2018/071065; 02.08.2018 WO PCT/EP2018/071066
(43) Veröffentlichungstag der Anmeldung: 01.07.2020
(60) Teilanmeldung: 20178993.0
(73) Patentinhaber: Siemens Aktiengesellschaft, 80333 München (DE)
(72) Erfinder: JETZFELLNER, Thomas, 85609 Aschheim (DE)
(86) Internationale Anmeldenummer: PCT/EP2018/078902
(87) Internationale Veröffentlichungsnummer: WO 2019/081434

(56) Entgegenhaltungen:
- DE-A1-102011 081 796
- DE-A1-102012 214 324
- DE-A1-102016 205 289
- DE-B3-102011 018 878

## Beschreibung

Die Erfindung bezieht sich auf ein Verfahren und Steuersystem zum Steuern und/oder Überwachen von Geräten.

Geräte, wie Feldgeräte und Fertigungsgeräte, werden immer stärker vernetzt und können beispielsweise von unterschiedlichen Betreibern bereitgestellt/betrieben werden. Diesen Geräten werden oft Befehlsfolgen übermittelt, die durch die Geräte ausgeführt werden können. Nachteilig ist dabei, dass eine Abarbeitung der Befehlsfolgen in einem heterogenen Netz aus Geräten von unterschiedlichen Betreibern schwer zu steuern ist, wie beispielsweise aus der Schrift DE 10 2011 018878 B3 ersichtlich ist.

Eine Aufgabe der vorliegenden Erfindung ist es, eine Alternative zu bekannten Lösungen aus dem Stand der Technik zu finden.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung ein Steuersystem zum Steuern und/oder Überwachen von Geräten, umfassend:
-- ein verteiltes Datenbanksystem (BC) aufweisend,
   - eine Vielzahl von Knoten (BCN, BCN D), wobei Knoten (BCN, BCN_D) und Geräte (D, BCN_D) über ein erstes Kommunikationsnetzwerk (NW1) miteinander verbunden sind;
- ein erstes Markierungsmodul (110) zum Zuordnen von Markierungsdatensätzen, wobei
   - jeweils einer der Markierungsdatensätze Steuerbefehlen anhand von Ausführungsanforderungen zugeordnet wird, wenn entsprechende Steuerbefehle die Ausführungsanforderungen erfüllen,
   - die Steuerbefehle, denen einer der jeweiligen Markierungsdatensatz zugeordnet ist, durch die Knoten (BCN, BCN_D) des verteilten Datenbanksystems (BC) oder durch die Geräte (D, BCN_D) ausführbar sind,
   - in den Ausführungsanforderungen gerätespezifische Anforderungen und/oder vorausgesetzte Steuerbefehle gespeichert sind,
   - das Markierungsmodul insbesondere ein erfindungsgemäßes Markierungsmodul ist;
- ein erstes Speichermodul (130) zum Speichern der jeweiligen Steuerbefehle mit ihrem jeweils zugehörigen Markierungsdatensatz in Steuertransaktionen, wobei
   - die Steuertransaktionen in dem verteilten Datenbanksystems (BC) gespeichert werden;
   - die Steuertransaktionen mittels dem verteilten Datenbanksystems (BC) an die Geräte (D, BCN_D) oder Knoten (BCN, BCN_D) übertragen werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "Bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transkation kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle). Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Eine Bestätigungstransaktion kann beispielsweise nach der erfolgreichen Ausführung von Steuertransaktionen durch ein Gerät in dem verteilten Datenbanksystem gespeichert werden (z. B. speichert das Gerät die Bestätigungstransaktion in dem verteilten Datenbanksystem). Eine Bestätigungstransaktion kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Bestätigungstransaktion beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Bestätigungstransaktion kann beispielsweise auch in dem verteilten Datenbanksystem gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen für die verbleibenden unausgeführten Steuerbefehle erfüllt, dann anhand der Bestätigungstransaktion diese unausgeführten Steuerbefehle der entsprechenden Steuertransaktion ausführen. Entsprechend kann die Bestätigungstransaktion beispielsweise den Grad der Ausführung bzw. eine Angabe über den ausgeführten Teil der Steuerbefehle umfassen. Alternativ oder zusätzlich kann eine Bestätigungstransaktion die Steuerbefehle angeben, die für eine erfolgreiche Ausführung der Steuerbefehle einer entsprechenden Steuertransaktion noch ausgeführt werden müssen. Entsprechend kann beispielsweise eine Bestätigungstransaktion einen Datensatz umfassen, der angibt welche der Steuerbefehle noch auszuführen sind bzw. der angibt welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Unter "Steuerbefehle" oder "Steuertransaktionen" können im Zusammenhang mit der Erfindung beispielsweise ein Smart-Contract [4][5] oder ausführbarer Programmcode verstanden werden, der insbesondere durch das verteilte Datenbanksystem ausgeführt wird, wobei beispielsweise das verteilte Datenbanksystem bzw. dessen Knoten und Infrastruktur die entsprechenden Steuerbefehle abarbeitet bzw. umsetzt. Insbesondere können mit den Steuerbefehlen die Geräte/Knoten gesteuert werden. Insbesondere können oder sollen mit den Steuerbefehlen bzw. den Steuerbefehlen der/einer Steuertransaktion die Geräte und/oder die Knoten gesteuert/angesteuert werden. Insbesondere ergeben mehrere Steuerbefehle oder Steuertransaktionen aus einem oder mehreren Datenblöcken eine Befehlsfolge, die insbesondere eine Fertigungsanlage mit den zugehörigen Fertigungsmaschinen steuern, die Geräte eines Automatisierungsnetzes steuern oder die Geräte eines Energieversorgungsnetzes steuern oder Geräte im Internet der Dinge steuern. Insbesondere sind in den Steuerbefehlen oder Steuertransaktionen (also auch in den Befehlsfolgen) die Fertigungsanweisungen oder Fertigungsschritte für ein Produkt kodiert. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Bestätigungstransaktionen für ausgeführte Steuerbefehle durch das Steuersystem ausgewertet werden und entsprechende Steuerbefehle als Reaktion auf die Bestätigungstransaktionen erzeugt werden. Für diese neuen Steuerbefehle werden dann beispielsweise wieder entsprechende Ausführungsanforderungen bestimmt und diese werden dann beispielsweise wieder in Steuertransaktionen gespeichert, damit diese beispielsweise - wie in der Erfindung beschrieben - von den entsprechenden Geräten ausgeführt werden können. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems verstanden werden, die durch Geräte oder Knoten des verteilten Datenbanksystems ausgeführt werden sollen. Bei dem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem ausgeführt werden sollen. Unter Steuerbefehlen können beispielsweise Befehlsfolgen oder Steuerbefehle verstanden werden mit denen mechanische und/oder elektrische und/oder elektromechanische und/oder elektronische Geräte gesteuert werden.

Unter "gerätespezifischen Anforderungen" können im Zusammenhang mit der Erfindung beispielsweise ein bestimmtes Gerät, das z. B. durch einen eindeutigen Identifizierer festgelegt ist, Geräte die vorgegebene Steuerungsaktionen durchführen können (z. B. ein Fertigungsroboter, der Metallteile verschweißen kann; ein Lackierroboter, der vorgegebene Farben auf ein Fertigungsteil auftragen kann; Geräte, die in einem Umspannwerk elektrische Verbindungen automatisiert herstellen) oder Geräte sein, die Fertigungsschritte bzw. Steuerbefehle mit einer vorgegebenen Präzision und/oder Geschwindigkeit ausführen (z. B. Drehbänke, Fräsen und Schneidemaschinen). Alternativ oder zusätzlich können "gerätespezifischen Anforderungen" auch bestimmte Geräteklassen voraussetzen, die für eine Ausführung oder Abarbeitung der Steuerbefehle vorgegeben werden. Insbesondere wird dabei unter einer Geräteklasse ein oder mehrere Geräte (z. B. Schleifgeräte oder Sägegeräte) verstanden, die beispielsweise in der Lage sind bestimmte vorgegebene Aktionen auszuführen (z. B. ein bestimmtes Material schleifen oder sägen). Insbesondere sind die gerätespezifischen Anforderungen, die Anforderungen die zum Ausführen der Steuerbefehle an die entsprechenden Geräte und/oder Knoten gestellt werden. Die gerätespezifische Daten oder Geräteeigenschaften entsprechen dann beispielsweise den tatsächlichen und/oder aktuellen gerätespezifische Daten oder Geräteeigenschaften eines Gerätes. Beispielsweise wird überprüft, ob ein Gerät bzw. ein Fertigungsmaschine in der Lage ist die Steuerbefehle mit der vorgegebenen Präzision, die z. B. in den gerätespezifischen Anforderungen vorgegeben sind, auszuführen. Insbesondere können gerätespezifischen Anforderungen auch als maschinelle und/oder mechatronische und/oder fertigungsspezifische Anforderungen bezeichnet werden. Insbesondere können gerätespezifische Daten oder Geräteeigenschaften auch als maschinelle und/oder mechatronische und/oder fertigungsspezifische Daten oder Geräteeigenschaften bezeichnet werden. Insbesondere können gerätespezifische Daten oder Geräteeigenschaften auch als Geräteinformationen bezeichnet werden. Insbesondere geben die gerätespezifischen Anforderungen die Anforderungen vor, die durch die gerätespezifischen Daten eines Gerätes erfüllt sein sollen. Mit anderen Worten geben die gerätespezifischen Anforderungen einen "Soll"-Wert vor, der mit dem "Ist"-Wert von den Geräten abgeglichen wird. Die gerätespezifischen Daten stellen dabei insbesondere die aktuellen Geräteeigenschaften dar. Diese Geräteeigenschaften/gerätespezifischen Daten umfassen beispielsweise die UID eines Gerätes bzw. eines Systems, verfügbare Werkzeuge oder unterstützte Fertigungsverfahren (fräsen, schleifen oder 3D-drucken), Fertigungspräzision, Fertigungskosten, Standort der Geräte, Netzwerkadresse zum Ansprechen/Ansteuern des Gerätes, berechtigte Nutzer usw.

Die gerätespezifischen Anforderungen können beispielsweise auch Sicherheitsanforderungen oder ortsbezogene Anforderungen (z. B. eine Länderangabe, eine GPS-Angabe oder Postleitzahl (PLZ)) sein, die ein Gerät für die Ausführung der Steuerbefehle erfüllen soll. Beispielsweise kann gefordert sein, dass das Gerät vorgegebene Sicherheitseinrichtungen aufweisen soll oder für die Ausführung der Steuerbefehle am Gerät noch eine bestimmte/vorgegebene Authentisierung und/oder Authentifizierung notwendig ist. Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert, dass er z. B. nur in vorgegebenen Ländern, z. B. Italien, Frankreich und Österreich, eine Bargeldauszahlung erlaubt, so wird dies in den gerätespezifischen Anforderungen (und insbesondere ggf. implizit in den Ausführungsanforderungen ebenfalls) gespeichert. Ein Geldautomat in Andorra würde dann ggf. keine Auszahlung erlauben bzw. diese unterbinden. Alternativ kann dies z. B. auch durch einen anderen Knoten des verteilten Datenbanksystems unterbunden werden oder durch einen Smart-Contract des verteilten Datenbanksystems unterbunden werden. Auch kann beispielsweise durch die Sicherheitsanforderungen eine spezifische Authentifizierung des Kunden gefordert sein. Beispielsweise, dass ein Pin für ein Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator)

Alternativ kann das Markierungsmodul die Steuerbefehle auch weiter analysieren und, wenn beispielsweise das Markierungsmodul bereits feststellt, dass die gerätespezifischen Anforderungen nicht erfüllt sind oder nicht erfüllbar sind, eine Steuertransaktion erstellen, die das entsprechende Gerät oder das System darauf hinweist und ggf. eine Ausführung der Steuerbefehle unterbindet. Alternativ kann beispielsweise auch keine Steuertransaktion erzeugt werden und es gibt irgendwann einen Timeout für die Ausführung der Steuerbefehle, z. B. nach einem vorgegebenen Zeitraum, der vorzugsweise konfigurierbar ist. Alternativ oder zusätzlich kann das Markierungsmodul z. B. auch keinen Markierungsdatensatz erzeugen, wenn die Ausführungsanforderungen nicht erfüllt sind. Alternativ oder zusätzlich kann das Markierungsmodul z. B. auch einen Markierungsdatensatz für Steuerbefehle erzeugen, wenn die Ausführungsanforderungen nicht erfüllt sind. Beispielsweise kann der Markierungsdatensatz die Information "Exection = True" umfassen, wenn die entsprechenden Steuerbefehle durch die Knoten und/oder die Geräte ausführbar sind. Beispielsweise kann der Markierungsdatensatz die Information "Exection = False" umfassen, wenn die entsprechenden Steuerbefehle durch die Knoten und/oder die Geräte nicht ausführbar sind. Insbesondere umfasst ein Markierungsdatensatz nur eine einfache Angabe, ob die Steuerbefehle ausführbar sind, jedoch keine weiteren Informationen, wie z. B. die Ausführungsanforderungen.

ten" können im Zusammenhang mit der Erfindung beispielsweise auch Systemeigenschaften oder Geräteeigenschaften eines Gerätes oder eines technischen Systems verstanden werden. Die gerätespezifischen Daten oder systemspezifischen Daten sind beispielsweise aktuelle Geräteeigenschaften oder Systemeigenschaften. Die gerätespezifischen Daten oder systemspezifischen Daten (bzw. die entsprechenden Eigenschaften) können beispielsweise für ein technisches System, die Geräte eines technischen Systems oder ein Gerät folgende Daten umfassen: die UID des Gerätes bzw. des Systems, verfügbare Werkzeuge oder unterstützte Fertigungsverfahren (fräsen, schleifen oder 3D-drucken) des Gerätes bzw. des Systems, Fertigungspräzision des Gerätes bzw. des Systems, Fertigungskosten des Gerätes bzw. des Systems, Standort des Gerätes bzw. des Systems, Netzwerkadresse zum Ansprechen/Ansteuern des Gerätes bzw. des Systems, berechtigte Nutzer für das Gerät oder das System, Namen des Gerätes bzw. des Systems, usw.

Je nach gewählter Implementierung können beispielsweise die systemspezifischen Daten übergreifend für ein oder mehreren Geräte eines technischen Systems realisiert sein, indem z. B. über eine UID/(Netzwerk-)Adresse des technischen Systems auch die entsprechenden Geräte des technischen Systems adressiert, identifiziert oder mit diesen kommuniziert werden können. Alternativ oder zusätzlich können beispielsweise die gerätespezifischen Daten für das eine Gerät oder die mehreren Geräte des technischen Systems in den systemspezifischen Daten umfasst sein.

Unter einem "technischen System" können im Zusammenhang mit der Erfindung beispielsweise ein Gerät oder mehrere Geräte verstanden werden, die kommunikativ miteinander und/oder mit einem verteilten Datenbanksystem (z. B. das erste verteilte Datenbanksystem) verbunden sind.

Unter "vorausgesetzte Steuerbefehle" können im Zusammenhang mit der Erfindung beispielsweise Steuerbefehle verstanden werden, die insbesondere durch andere Knoten (des verteilten Datenbanksystems) und/oder durch eines oder mehrere der Geräte bereits ausgeführt sein müssen, bevor die entsprechenden Steuerbefehle ausgeführt werden können. Insbesondere sind für diese vorausgeführten Steuerbefehle entsprechende Bestätigungstransaktionen in dem verteilten Datenbanksystem gespeichert (z. B. in Datenblöcken des verteilten Datenbanksystems). Insbesondere werden bei diesen vorausgeführten oder vorausgesetzten Steuerbefehlen auch die diesen vorausgeführten Steuerbefehlen zugeordneten gerätespezifischen Anforderungen mit überprüft bzw. mit berücksichtigt. Mittels der Ausführungsanforderungen wird insbesondere sichergestellt, dass beispielsweise eine Reihenfolge der Fertigungsschritte beim Erstellen eines Produktes eingehalten wird. Es wird damit beispielsweise erreicht, dass die Fertigungsreihenfolge in sinnvoller Weise eingehalten wird. Es wird z. B. verhindert, dass ein Fertigungsschritt durch einen anderen zerstört wird, nur weil die Fertigungsreihenfolge nicht eingehalten wurde. Auf ähnliche Weise kann insbesondere auch eine Steuerung von einem Energieversorgungsnetz gesteuert werden, indem z. B. Transformationen oder Spannungskoppler in der richtigen Reihenfolge eingeschaltet oder mit dem Energieversorgungsnetz verbunden werden. Werden beispielsweise für das Ausführen von Steuerbefehlen bzw. Steuertransaktionen keine vorausgesetzten Steuerbefehle benötigt, können die vorausgesetzten Steuerbefehle leer sein. Beispielsweise können diese mit einer Null belegt sein, einem Leerstring belegt sein oder einem Wert der angibt, dass keine vorausgesetzten Steuerbefehle notwendig sind. Alternativ kann beispielsweise einem Teil der Steuerbefehle keine Ausführungsanforderung zugeordnet sein, wobei insbesondere zumindest einem der Steuerbefehle zumindest eine Ausführungsanforderung zugeordnet ist. Beispielsweise handelt es sich bei den vorausgesetzten Steuerbefehlen um Steuerbefehle, die z. B. von einem Gerät und/oder Knoten in eine vorgegebene mechanische Bewegung und/oder andere physikalische Größen (z. B. Druck oder Temperatur) umgesetzt wurden oder vor der Abarbeitung der Steuerbefehle umgesetzt sein sollen (z. B. für ein Vorbereiten eines Werkstückes). Mit den vorausgesetzten Steuerbefehlen (sofern diese erfolgreich ausgeführt) wurden dann beispielsweise die Aktoren der Geräte und/oder der Knoten derart angesteuert, dass ein Werkstück in den Zustand bzw. Fertigungszustand versetzt wurde, dass z. B. eine Weiterverarbeitung möglich ist oder nach der Abarbeitung der vorausgesetzten Steuerbefehle ermöglicht wird. Entsprechend können dann z. B. die entsprechenden Geräten/Knoten mit den Steuerbefehlen der Steuertransaktion derart angesteuert werden, dass die Weiterverarbeitung erfolgt (wenn z. B. die vorausgesetzten Steuerbefehle ausgeführt wurden und für diese insbesondere Bestätigungstransaktionen vorliegen). Mittels der vorausgesetzten Steuerbefehle und der Geräte und/oder Knoten kann beispielsweise auch ein Regelkreis geregelt und/oder gesteuert werden, indem beispielsweise die Bestätigungstransaktionen für ausgeführte/vorausgesetzte Steuerbefehle durch das Steuersystem ausgewertet werden und entsprechende Steuerbefehle als Reaktion auf die Bestätigungstransaktionen erzeugt werden. Bei den vorausgesetzten Steuerbefehlen kann es sich beispielsweise auch um Steuerbefehle handeln, mit denen ein kryptographisches Gerät und/oder Verfahren angesteuert wurde (z. B. eine Nutzerauthentisierung oder Nutzerauthentifizierung).Alternativ oder zusätzlich kann durch die vorausgesetzten Steuerbefehle beispielsweise eine Erfassung von bestimmten Messgrößen (z. B. durch einen Sensor) vorgegeben sein. Beispielsweise wird damit vorgegeben, dass entsprechende Transaktionen mit entsprechenden Messwerten vorgegebene Messwertbereiche oder Schwellwerte einhalten sollen. Die Messwerte können beispielsweise einen Wert einer gemessenen Größe (z. B. 30 °C) und/oder Datum/Uhrzeit der Erfassung und/oder Ort der Erfassung und/oder Sensortyp und/oder weitere Informationen über den Sensor (z. B. Messgenauigkeit).

Insbesondere ist unter "Speichern von Transaktionen in Datenblöcken" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. eine virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden, wie dieser beispielsweise durch das Lightning-Netzwerk zunächst nur für die Übertragung von Kryptowährung realisiert ist [9]. Beispielsweise können über diesen Kanal Transaktionen/Nachrichten schneller verschickt werden und eine Bestätigung über diesen Datenaustausch im verteilten Datenbanksystem gespeichert werden. Damit können beispielsweise wichtige und/oder zeitkritische Steuerbefehle bzw. Steuertransaktionen mit höherer Geschwindigkeit an ein entsprechendes Gerät übertragen werden und dabei z. B. die langsamere Datenübertragung des verteilten Datenbanksystems (z. B. bei der Replikation der Datenblöcke/Transaktionen) vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das (erste) Speichermodul und/oder das (erste) Bestimmungsmodul) und einem Empfänger (z. B. das Gerät, das die Steuerbefehle ausführen soll) ausgetauscht ohne, dass weitere Knoten und/oder Geräte des verteilten Datenbanksystems in diesem Datenaustausch involviert sind. Hingegen können bei einem separaten Kommunikationskanal Knoten und/oder Geräte des verteilten Datenbanksystems in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Beispielsweise können die notwendigen Daten für ein Ermitteln der Ausführbarkeit und/oder die Steuertransaktionen zwischen dem Sender und/dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion) in dem verteilten Datenbanksystem gespeichert (z. B. in Datenblöcken des verteilten Datenbanksystems). Das Ergebnis der Datenübertragung kann beispielsweise eine Bestätigung des der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung der Ausführbarkeit der Steuerbefehle durch ein Gerät handeln, wobei beispielsweise ein entsprechendes Gerät bestätigt hat, dass es die Steuerbefehle ausführen kann. Dies kann beispielsweise wiederum in einer Transaktion (z. B. in einer Ausführbarkeitsbestätigungstransaktion) gespeichert werden und z. B. in den Ausführungsanforderungen (z. B. in den gerätespezifischen Anforderungen) gespeichert werden. Alternativ oder zusätzlich wird die Ausführbarkeitsbestätigungstransaktion in dem verteilten Datenbanksystem gespeichert. Die Ausführbarkeitsbestätigungstransaktion umfasst dabei beispielsweise einen eindeutigen Identifizierer für das Gerät, das in der Lage ist die Steuerbefehle auszuführen bzw. die entsprechenden Ausführungsanforderungen erfüllt. Alternativ oder zusätzlich umfasst die Ausführbarkeitsbestätigungstransaktion beispielsweise Daten über die Ausführung z. B. wie gut bzw. zu welchem Grad die Ausführungsanforderungen erfüllt werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen). Alternativ oder zusätzlich umfasst die Ausführbarkeitsbestätigungstransaktion beispielsweise gerätespezifische Daten des entsprechenden Gerätes, die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalt eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch können beispielsweise die Steuertransaktionen auf analoge Weise an das entsprechende Gerät übertragen werden, das die Steuerbefehle ausfühlen soll bzw. kann. Hierzu kann beispielsweise ein weiterer separater und/oder direkter Kommunikationskanal zwischen den Sender und dem Empfänger aufgebaut werden. Alternativ der oben genannte Kommunikationskanal beispielsweise weiterverwendet werden. Über den entsprechenden Kommunikationskanal werden dann beispielsweise die entsprechenden Steuertransaktionen an das entsprechende Gerät übertragen. Wird beispielsweise der Kommunikationskanal wieder geschlossen/beendet, wenn die Übertragung (erfolgreich) abgeschlossen wurde, wird das Ergebnis der Übertragung z. B. als eine Übertragungsbestätigungstransaktion in dem verteilten Datenbanksystem gespeichert. Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von Steuertransaktionen beschränkt.

Der separate und/oder direkte Kommunikationskanal ist dahingehend vorteilhaft um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher Priorität) genutzt wird. Beispielsweise kann anhand der Ausführungsanforderungen (z. B. es sind zeitkritische Steuerbefehle oder Steuerbefehle für eine Echtzeitanwendung) bestimmt werden, ob es sich um entsprechende Steuerbefehle handelt, die über einen entsprechenden separaten Kommunikationskanal übertragen werden sollen. Alternativ oder zusätzlich kann das (erste) Bestimmungsmodul beispielsweise beim bestimmen der Ausführungsanforderungen entsprechende Übertragungsanforderungen für eine Datenübertragung der Steuertransaktionen bestimmen. Die Übertragungsanforderungen können beispielsweise in den Ausführungsanforderungen gespeichert werden. Anhand der Übertragungsanforderungen kann dann beispielsweise das Speichermodul ermitteln, ob die Steuertransaktionen über eine Übertragung an das entsprechende Gerät in dem verteilten Datenbanksystem gespeichert werden oder ob der separate und/oder direkte Kommunikationskanal für eine Datenübertragung an das entsprechende Gerät genutzt wird. Die Datenübertragung kann dann beispielsweise durch das (erste) Speichermodul erfolgen, das hierzu z. B. ein entsprechendes Kommunikationsmodul (z. B. eine Netzwerkschnittstelle) umfasst.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch oder ein Peer 2 Peer Kommunikationssystem oder eine Peer 2 Peer Applikation handeln. Dies kann beispielsweise ein Netzwerk oder ein Peer-2-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist. Ein Gerät oder Knoten kann beispielsweise einen Aktor umfassen. Bei einem Gerät oder Knoten kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Bei einem Gerät oder Knoten kann es sich beispielsweise kryptographisches Gerät/Knoten handeln (z. B. zum Durchführen einer Nutzerauthentisierung oder Nutzerauthentifizierung) .

Mit der Erfindung ist es insbesondere möglich eine dezentrale Infrastruktur zur Ausführung von Steuerbefehlen zu realisieren. Insbesondere lässt sich dadurch eine Steuerung der Geräte im Internet der Dinge dezentral durchführen, selbst wenn sich einzelne Betreiber von Geräten und/oder Gerätegruppen der Geräte nicht vertrauen. Ein unrechtmäßiges Bevorzugen eines Knotens (z. B. durch Betrug/Bestechung) kann deutlich erschwert werden, wenn beispielsweise eine blockkettenbasierte Implementierung des verteilten Datenbanksystems genutzt wird, da ein Vertrauensschutz bzw. ein Manipulationsschutz analog zu Bitcoin bei den Steuertransaktionen bzw. Bestätigungstransaktionen realisiert wird. Insbesondere kann auf eine zentrale Instanz, die eine Authentisierung der Knoten vornimmt, verzichtet werden. Wird beispielsweise eine Realisierung des Datenbanksystems mittels einer Blockkette, die insbesondere eine kryptographische Währung wie Bitcoin implementiert, so kann beispielsweise auf einfache und effiziente Weise eine Abrechnung für eine Abarbeitung der Steuerbefehle einem Auftraggeber, der die Steuerbefehle eingestellt hat bzw. der eine Befehlsfolge (aus denen z. B. die Steuerbefehle hergeleitet sind) bereitgestellt hat, abgerechnet werden.

Zusätzlich kann beispielsweise die Sicherheit beim Betreiben des verteilten Datenbanksystems (z. B. einer Blockkette) erhöht werden, da insbesondere für die Ausführung der Steuerbefehle eine zusätzliche Prüfung eingeführt wurde. Mit anderen Worten werden insbesondere ungeprüfte Transaktionen bzw. Steuerbefehle in geprüfte Transaktionen konvertiert, wobei die Prüfung beispielsweise anhand von Knoten- oder Geräteeigenschaften von Geräten oder Knoten (z. B. den gerätespezifischen Daten) erfolgt, welche die Steuerbefehle ausführen sollen.

Es ist beispielsweise auch denkbar, dass mittels des Verfahrens die Auszahlung von Bargeld an Geldautomaten verbessert bzw. sicherer gemacht wird, wenn der Geldautomat beispielsweise ein Knoten des verteilten Datenbanksystems ist oder über einen Knoten des verteilten Datenbanksystems oder eine andere Schnittstelle auf die entsprechenden Steuertransaktionen des verteilten Datenbanksystems zugreift oder diese abruft.

Alternativ oder zusätzlich können die Ausführungsanforderungen beispielsweise auch noch weitere für die Ausführung zu berücksichtigende Vorgaben umfassen. Dies kann beispielsweise eine Vorgabe sein, dass eine bestimmte Gebühr entrichtet sein muss, damit ein Steuerbefehl von einem entsprechenden Knoten oder Gerät abgearbeitet werden kann. Dies kann beispielsweise in den gerätespezifischen Anforderungen gespeichert werden, indem das Gerät für seine Nutzung bzw. für die Abarbeitung von Steuerbefehlen eine Entrichtung einer vorgegeben Gebühr voraussetzt. Die Entrichtung der vorgegeben Gebühr kann beispielsweise mittels kryptographischer Währungen erfolgen, die vorzugsweise ebenfalls in Transaktionen des verteilten Datenbanksystems dokumentiert bzw. gespeichert werden. Ob diese Vorgaben erfüllt sind (z. B. Gebührenentrichtung) kann z. B. ebenfalls durch das Markierungsmodul bzw. der Evaluierungseinheit überprüft werden, indem z. B. überprüft wird, ob Transaktionen für eine entsprechende Entrichtung der Gebühren im verteilten Datenbanksystem verfügbar sind. Alternativ kann beispielsweise auch ein Kontostand bei einer Bank überprüft werden, ob eine entsprechende Gebührenentrichtung durchgeführt wurde. Sind diese Vorgaben der Ausführungsanforderungen z. B. für entsprechende Steuerbefehle erfüllt, können diese weiterverarbeitet werden und wie bereits erläutert in Steuertransaktionen gespeichert werden.

Bei einer ersten Ausführungsform des Steuersystems sind die vorausgesetzten Steuerbefehle bereits ausgeführte Steuerbefehle, für die eine Bestätigung über deren Ausführung in Bestätigungstransaktionen (der Datenblöcke) des verteilten Datenbanksystems gespeichert ist.

Das Steuersystem ist dahingehend vorteilhaft, um insbesondere eine Reihenfolge bei der Ausführung bzw. Abarbeitung der Steuerbefehle durch das entsprechende Gerät mittels der vorausgesetzten Steuerbefehle vorzugeben. Insbesondere können die vorausgesetzten Steuerbefehle, Steuerbefehle der gleichen Befehlsfolge sein, die insbesondere zeitlich vor den durch das entsprechende Gerät (aktuell) auszuführenden Steuerbefehlen ausgeführt sein müssen. Die vorausgesetzten Steuerbefehle waren dabei insbesondere ebenfalls in Steuertransaktionen speichert, die wiederum in Datenblöcken (also einen Datenblock oder mehreren Datenblöcken) des verteilten Datenbanksystems gespeichert sind.

Bei weiteren Ausführungsformen des Steuersystems ist durch die Ausführungsanforderungen ein Zeitlimit vorgegeben, bis zu dem Steuerbefehle abzuarbeiten sind.

Das Steuersystem ist dahingehend vorteilhaft, um insbesondere vorgegebenen oder ausgewählten Steuerbefehlen ein Zeitlimit mittels der Ausführungsanforderungen vorzugeben, bis zu dem die Steuerbefehle durch das entsprechende Gerät abzuarbeiten sind. Wird dieses Zeitlimit beispielsweise überschritten, so kann insbesondere durch das Überprüfungsmodul ein Steuersignal bereitgestellt werden, um auf das Überschreiten des Zeitlimits zu reagieren. Mittels des Steuersignals kann dann beispielsweise ein Fertigungsmitarbeiter, ein Servicetechniker oder ein Alarmsignal automatisiert informiert bzw. angesteuert werden. Es kann beispielsweise auch der Fertigungsprozess neu gestartet werden.

Bei weiteren Ausführungsformen des Steuersystems umfassen die Markierungsdatensätze eindeutige Identifizierer für die Geräte und/oder Knoten, welche die entsprechenden Steuerbefehle ausführen sollen.

Dies ist dahingehend vorteilhaft, damit die Geräte/Knoten beispielsweise schnell feststellen können, ob die entsprechenden Steuerbefehle z. B. durch ein bestimmtes Gerät ausgeführt werden können. Dabei ist den Geräten bzw. Knoten beispielsweise ein eindeutiger Identifizierer (Unique Identifier (UID)) zugeordnet. Das Steuersystem bzw. das Markierungsmodul kennt insbesondere die entsprechenden eindeutigen Identifizierer der Geräte (z. B. mit den Daten zu Geräten/Knoten im Konfigurationsspeicher gespeichert) und weist beim Zuordnen der Steuerbefehle entweder den Steuerbefehlen selbst und/oder mittels dem Markierungsdatensatz und/oder mittels der Steuertransaktion die entsprechenden eindeutigen Identifizierer zu. Bei den zugewiesenen bzw. zugeordneten eindeutigen Identifizierern handelt es sich insbesondere um die entsprechenden eindeutigen Identifizierer der Geräte oder der Knoten, die die Steuerbefehle ausführen sollen.

Bei weiteren Ausführungsformen des Steuersystems umfasst das Steuersystem einen Optimierer, der eine Ausführung der Steuerbefehle durch die Geräte anhand eines vorgegebenen Kriteriums optimiert.

Das Steuersystem ist dahingehend vorteilhaft, um insbesondere einen Fertigungsprozess nach den vorgegeben Kriterien zu optimieren. Die vorgegebenen Kriterien können beispielsweise die Fertigungszeit, die verursachten Kosten oder die aufzuwendende Energie sein. Beispielsweise kann der Optimierer eine Befehlsfolge in Steuerbefehle zerlegen, die wiederum in den Steuertransaktionen gespeichert sind. Dabei zerlegt der Optimierer die Befehlsfolge in die Steuerbefehle anhand des vorgegebenen Kriteriums. Ist beispielsweise das Kriterium die Fertigungszeit bei der Produktion eines Produktes zu optimieren (z. B. Fertigungszeit für das Produkt möglichst gering zu halten), wird die Befehlsfolge derart zerlegt, dass die Einzelkomponenten parallel von mehreren Geräten hergestellt werden - also die entsprechenden Steuerbefehle in Steuertransaktionen von diesen abgearbeitet werden. Ist beispielsweise das Kriterium, die Fertigungskosten bei der Produktion eines Produktes zu optimieren, wird die Befehlsfolge derart zerlegt, dass die Einzelkomponenten seriell von einem Gerät (z. B. dem entsprechenden Gerät) oder möglichst wenigen Geräten hergestellt werden - also die entsprechenden Steuerbefehle in Steuertransaktionen von den entsprechenden abgearbeitet werden. Um dies zu steuern, werden beispielsweise durch den Optimierer die entsprechenden Informationen an das Markierungsmodul übergeben, sodass das Markierungsmodul diese Informationen in den Ausführungsanforderungen hinterlegt. Der Optimierer kann dabei beispielsweise ein separates Modul sein oder ein integraler Teil des Markierungsmoduls sein. Alternativ kann der Optimierer beispielsweise die Optimierung anhand der Ausführungsanforderungen vornehmen oder die Ausführungsanforderungen sogar selbst erstellen und dem Markierungsmodul bereitstellen.

Bei weiteren Ausführungsformen des Steuersystems ist das verteilte Datenbanksystem eine Blockkette und die Datenblöcke sind Blöcke der Blockkette, oder das verteilte Datenbanksystem ist eine Peer-2-Peer Datenbanksystem.

Das Steuersystem ist dahingehend vorteilhaft, um insbesondere eine dezentrale Steuersysteminfrastruktur zu realisieren. Zudem kann insbesondere ein solches Steuersystem realisiert werden, selbst wenn sich die Betreiber der Geräte nicht vertrauen.

Bei weiteren Ausführungsformen des Steuersystems sind die Datenblöcke über eine kryptographische Hashfunktion miteinander verkettet.

Bei weiteren Ausführungsformen des Steuersystems umfasst das Steuersystem, wobei das Aktivitätsmodul dazu eingerichtet ist, die Aktivität des Steuersystems anzuzeigen und/oder zu dokumentieren.

Das Steuersystem ist dahingehend vorteilhaft, um insbesondere die Aktivität beispielsweise durch eine Statuslampe, ein Heartbeat Signal oder ein Steuersignal im Betrieb durch einen Administrator überprüfbar zu machen. Alternativ kann das Aktivitätsmodul beispielsweise Informationen in eine Datei schreiben, um beispielsweise Systemzustände oder Neustarts von Knoten oder Modulen zu dokumentieren.

Gemäß einem weiteren Aspekt betrifft die Erfindung ein Markierungsmodul für ein verteiltes Datenbanksystem oder für ein Steuersystem mit einem verteilten Datenbanksystem zum Steuern und/oder Überwachen von Geräten aufweisend:
- insbesondere eine erste Schnittstelle (810) zum Empfangen oder Abrufen von Steuerbefehlen;
- eine erste Evaluierungseinheit (820) zum Zuordnen von Markierungsdatensätzen, wobei
   - jeweils einer der Markierungsdatensätze den jeweiligen Steuerbefehlen anhand von Ausführungsanforderungen zugeordnet wird, wenn entsprechende Steuerbefehle die Ausführungsanforderungen erfüllen,
   - die Steuerbefehle, denen einer der jeweiligen Markierungsdatensatz zugeordnet ist, durch Knoten eines verteilten Datenbanksystems oder durch Geräte ausführbar sind, wobei
   - in den Ausführungsanforderungen gerätespezifische Anforderungen und/oder vorausgesetzte Steuerbefehle gespeichert sind;

Das Markierungsmodul ist dahingehend vorteilhaft, um insbesondere die Ausführung von Steuerbefehlen von Geräten oder Knoten (z. B. Fertigungsroboter, Steuersysteme für ein Energieverteilungsnetzwerk, Bankterminals, Geldautomaten, Geldtransfers zwischen Banken) zu verbessern, die über ein Netzwerk miteinander verbunden sind.

Zusätzlich kann beispielsweise die Sicherheit beim Betreiben einer verteilten Infrastruktur (z. B. ein verteiltes Datenbanksystem mit Geräten und/oder Knoten bzw. mit Geräten, die auf das verteilte Datenbanksystem zugreifen) erhöht werden, die ganz oder teilweise mittels einem verteilten Datenbanksystem (z. B. einer Blockkette) implementiert ist. Insbesondere ist der Begriff "Steuerbefehle" breit zu verstehen. Hierbei kann es sich beispielsweise zusätzlich zu der oben genannten Definition auch um Transaktionen handeln, die durch ein Gerät (z. B. einen Knoten einer Blockkette oder ein Gerät außerhalb der Blockkette, z. B. Gerät D) ausgeführt werden sollen. Mit anderen Worten werden durch die Vorrichtung insbesondere ungeprüfte Transaktionen in geprüfte Transaktionen konvertiert, wobei die Prüfung beispielsweise anhand der gerätespezifischen Anforderungen und gerätespezifischen Daten erfolgt, welche die Steuerbefehle ausführen sollen.

Mittels der Erfindung können beispielsweise geforderte gerätespezifische Anforderungen für die Ausführung der Steuerbefehle am Gerät sichergestellt werden. Dabei können die gerätespezifischen Anforderungen beispielsweise auch Sicherheitsanforderungen und/oder ortsbezogene Anforderungen (z. B. eine Länderangabe, eine GPS-Angabe oder PLZ) sein, die ein Gerät für die Ausführung der Steuerbefehle erfüllen soll. Oder es kann beispielsweise noch eine bestimmte/vorgegebene Authentisierung und/oder Authentifizierung durch die gerätespezifischen Anforderungen für die Ausführung gefordert werden.

Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert (z. B. bei seiner Heimatbank oder beim Onlinebanking), dass er z. B. nur in vorgegebenen Ländern, z. B. Italien, Frankreich und Österreich, eine Bargeldauszahlung erlaubt, so wird dies in den gerätespezifischen Anforderungen (und somit insbesondere implizit ebenfalls in den Ausführungsanforderungen) gespeichert. Ein Geldautomat in Andorra würde dann ggf. keine Auszahlung erlauben bzw. diese unterbinden. Auch kann beispielsweise durch die Sicherheitsanforderungen eine vorgegebene Authentifizierung und/oder Authentifizierungsmethode des Kunden gefordert sein. Hierzu kann beispielsweise ein Pin für ein Auszahlung eingegeben werden bzw. gefordert sein (was z. B. in den USA nicht zwangsläufig der Fall ist) und/oder eine bestimmte Pin-Länge gefordert sein (z. B. 8 Zeichen) und/oder andere zusätzliche Authentisierungsverfahren gefordert sein (z. B. 2 Faktor-Authentisierung, Mobile-Tan, Google Authenticator) .

Alternativ kann das Markierungsmodul, z. B. die Evaluierungseinheit, die Steuerbefehle auch weiter analysieren und, wenn beispielsweise das Markierungsmodul bzw. die (erste) Evaluierungseinheit bereits feststellt, dass die gerätespezifischen Anforderungen nicht erfüllt sind oder nicht erfüllbar sind (z. B. die Steuerbefehle wurden aus einem nicht freigegebenen Land geschickt oder sind für ein Gerät oder Knoten in einem nicht frei gegeben Land bestimmt), eine Steuertransaktion erstellen, die das entsprechende Gerät oder das System darauf hinweist und vorzugsweise eine Ausführung der Steuerbefehle unterbindet bzw. verbietet. Alternativ kann beispielsweise auch keine Steuertransaktion und/oder Markierungsdatensatz erzeugt werden und es gibt irgendwann einen Timeout für die Ausführung der Steuerbefehle, z. B. nach einem vorgegebenen Zeitraum. Alternativ oder zusätzlich kann beispielsweise ein Steuersignal bereitgestellt werden, das bei einer Nicht-Ausführbarkeit von Steuerbefehlen z. B. einen Techniker informiert oder ein Warnsignal steuert.

Es wäre beispielsweise auch denkbar, dass Online-Banking auf diese Weise abgesichert wird, indem Sicherheitsanforderungen und/oder ortsbezogene Anforderungen des Rechners (also das Gerät, das Steuerbefehle verschickt) überprüft wird und ob die Auszahlung durch ein anderes Gerät erlaubt ist.

Zusätzlich kann das Markierungsmodul beispielsweise noch ein erstes Zuordnungsmodul und/oder ein erstes Speichermodul und/oder weitere Module umfassen, so wie dies in den Ausführungsbeispielen erläutert wurde. Die Knoten oder Geräte können dann beispielsweise ein Überprüfungsmodul und/oder ein Ausführungsmodul umfassen, so wie dies in den Ausführungsbeispielen bzw. Ausführungsformen erläutert wurde. Auch lassen sich insbesondere andere Merkmale der anderen Aspekte und Ausführungsbeispiele der Erfindung auf diesen Aspekt der Erfindung übertragen.

Die gerätespezifischen Anforderungen für Knoten oder Geräte können beispielsweise auch nutzerbezogen sein oder nutzerspezifische Anforderungen umfassen. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können z. B. auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Markierungsmodul berücksichtigt bzw. überprüft werden. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugängig ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B.

Zugriff ist nur durch Einstecken einer Chipkarte und Eingeben einer Pin möglich).

Stellt das Markierungsmodul beispielsweise fest, dass kein Knoten und/oder Gerät (z. B. einer Fertigungsanlage) die Ausführungsanforderungen unterstützt bzw. erfüllt, wird kein Markierungsdatensatz erstellt oder es wird ein Markierungsdatensatz erstellt, der angibt, dass die entsprechenden Steuerbefehle nicht ausführbar sind oder ausgeführt werden können. Zusätzlich kann das Markierungsmodul z. B. eine Ausführungspolicy berücksichtigen, die angibt, welche Steuerbefehle überhaupt von den Knoten und/oder Geräte akzeptiert werden und/oder ausgeführt werden sollen. Es kann beispielsweise über diese allgemeine Ausführungspolicy vorgegeben sein, dass bestimmte vorgegebene Steuerbefehle generell von den Geräten und/oder Knoten nicht ausgeführt werden sollen (z. B. weil deren Ausführung zu kostspielig ist oder mit einem zu hohen Verschleiß eines Gerätes (z. B. einer Werkzeugmaschine) einhergeht), obwohl die Geräte und/oder Knoten die entsprechenden Steuerbefehle ausführen könnten. Eine solche Ausführungspolicy kann z. B. ebenfalls ein Teil der Ausführungsanforderungen sein bzw. diese umfassen.

Mit anderen Worten kann das Markierungsmodul als Filter für Steuerbefehle oder Steuertransaktionen dienen, um z. B. eine Ausführung von Steuerbefehlen zu verhindern, die durch die Geräte und/oder Knoten nicht ausgeführt werden dürfen oder deren Ausführungsanforderungen nicht erfüllt sind. Dadurch wird insbesondere verhindert, dass solche ungewollten Steuerbefehle oder Steuertransaktionen in einem verteilten Datenbanksystem an die Geräte und/oder Knoten verteilte wird bzw. ausführbare Steuertransaktionen für die Geräte und/oder Knoten überprüft sind. Dabei wird ebenfalls erreicht, dass ausführbaren Steuerbefehlen vorzugsweise ein entsprechender Markierungsdatensatz zugeordnet ist.

Alternativ oder zusätzlich können die Ausführungsanforderungen beispielsweise auch noch weitere für die Ausführung zu berücksichtigende Vorgaben umfassen. Dies kann beispielsweise eine Vorgabe sein, dass eine bestimmte Gebühr entrichtet sein muss, damit ein Steuerbefehl von einem entsprechenden Knoten oder Gerät abgearbeitet werden kann. Dies kann beispielsweise in den gerätespezifischen Anforderungen gespeichert werden, indem das Gerät für seine Nutzung bzw. für die Abarbeitung von Steuerbefehlen eine Entrichtung einer vorgegeben Gebühr voraussetzt. Die Entrichtung der vorgegeben Gebühr kann beispielsweise mittels kryptographischer Währungen erfolgen, die vorzugsweise ebenfalls in Transaktionen des verteilten Datenbanksystems dokumentiert bzw. gespeichert werden. Ob diese Vorgaben erfüllt sind (z. B. Gebührenentrichtung) kann z. B. ebenfalls durch das Markierungsmodul bzw. der Evaluierungseinheit überprüft werden, indem z. B. überprüft wird, ob Transaktionen für eine entsprechende Entrichtung der Gebühren im verteilten Datenbanksystem verfügbar sind. Alternativ kann beispielsweise auch ein Kontostand bei einer Bank überprüft werden, ob eine entsprechende Gebührenentrichtung durchgeführt wurde. Sind diese Vorgaben der Ausführungsanforderungen z. B. für entsprechende Steuerbefehle erfüllt, können diese weiterverarbeitet werden und wie bereits erläutert in Steuertransaktionen gespeichert werden.

Bei weiteren Ausführungsformen des Markierungsmoduls umfasst das Markierungsmodul einen Optimierer, wobei der Optimierer die Ausführung der Steuerbefehle durch die Geräte anhand eines vorgegebenen Kriteriums optimiert.

Bei weiteren Ausführungsformen des Markierungsmoduls umfasst das Markierungsmodul ein erstes Zerlegemodul, wobei das erste Zerlegemodul dazu eingerichtet ist, eine Befehlsfolge in die entsprechenden Steuerbefehle zu zerlegen. Die entsprechenden Steuerbefehle werden beispielsweise dem Steuersystem oder dem ersten Markierungsmodul bereitgestellt. Vorzugsweise werden die entsprechenden Steuerbefehle über das Markierungsmodul dem Steuersystem bereitgestellt, sodass z. B. das Steuersystem die entsprechenden Steuertransaktionen mit Steuerbefehlen über das verteile Datenbanksystem an die Knoten oder Geräte übermittelt.

Bei weiteren Ausführungsformen des Markierungsmoduls umfasst das Markierungsmodul ein Aktivitätsmodul, wobei das Aktivitätsmodul dazu eingerichtet ist, die Aktivität des Markierungsmoduls anzuzeigen oder zu dokumentieren.

Das Markierungsmodul ist dahingehend vorteilhaft, um insbesondere die Aktivität beispielsweise durch eine Statuslampe, ein Heartbeat Signal oder ein Steuersignal im Betrieb durch einen Administrator überprüfbar zu machen. Alternativ kann das Aktivitätsmodul beispielsweise Informationen in eine Datei schreiben, um beispielsweise Systemzustände oder Neustarts von Knoten oder Modulen oder des Markierungsmoduls zu dokumentieren.

Bei weiteren Ausführungsformen des Markierungsmoduls umfasst das Markierungsmodul einen Konfigurationsspeicher, der gerätespezifische Daten über die Geräte und/oder gerätespezifische Daten über die Knoten und/oder die gerätespezifische Anforderungen umfasst.

Das Markierungsmodul ist dahingehend vorteilhaft, um insbesondere schnell auf die gerätespezifischen Daten zuzugreifen und/oder die gerätespezifischen Anforderungen für bestimmte Transaktionen oder Geräte vorab zu konfigurieren. Der Konfigurationsspeicher kann beispielsweise durch Blöcke bzw. Datenblöcke des verteilten Datenbanksystems realisiert werden. Die gerätespezifischen Anforderungen für Knoten oder Geräte können beispielsweise auch nutzerbezogen sein. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Markierungsmodul berücksichtigt werden, um dem Markierungsdatensatz zu erstellen. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugänglich ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B. Zugriff ist nur durch Einstecken einer Chipkarte und Eingeben einer Pin möglich).

Bei weiteren Ausführungsformen des Markierungsmoduls umfasst das Markierungsmodul eine administrative Schnittstelle.

Das Markierungsmodul ist dahingehend vorteilhaft, um insbesondere eine Konfiguration des Markierungsmoduls zu ermöglichen. Über die administrative Schnittstelle können beispielsweise die gerätespezifischen Anforderungen konfiguriert werden und vorzugsweise im verteilten Datenbanksystem gespeichert werden.

Bei weiteren Ausführungsformen des Markierungsmoduls umfasst das Markierungsmodul eine Erfassungseinheit zum Erfassen von gerätespezifischen Daten über die Geräte oder von gerätespezifischen Daten über Knoten.

Das Markierungsmodul ist dahingehend vorteilhaft, um insbesondere eine Überprüfung und Erstellung der gerätespezifischen Daten zu erleichtern und zu beschleunigen. Zwar könnte das Markierungsmodul diese Daten jeweils bei jeder einzelnen Bestimmung neu von den Geräten oder Knoten abfragen, jedoch ist es insbesondere zweckdienlicher, dass die Erfassungseinheit diese Daten beispielsweise zu vorgegebenen Zeitpunkten oder Intervallen abfragt und z. B. in einen Konfigurationsspeicher speichert oder die Knoten und Geräte erledigen dies selbständig, z. B. nach dem Einschalten, zu vorgegebenen Zeitpunkten oder Intervallen, indem diese Informationen der Erfassungseinheit übermittelt werden. Ist die Erfassungseinheit beispielsweise als Smart-Contract des verteilten Datenbanksystems realisiert, kann dies beispielsweise auch beim Verbinden mit dem verteilten Datenbanksystem erfolgen.

Bei weiteren Ausführungsformen des Markierungsmodul ist das Markierungsmodul ein Knoten eines verteilten Datenbanksystems oder ein Smart-Contract eines verteilten Datenbanksystems oder als Gerät ausgebildet.

Bei weiteren Ausführungsformen des Markierungsmoduls umfasst das Markierungsmodul ein erstes Zuordnungsmodul zum Zuordnen der jeweiligen Ausführungsanforderungen zu den Steuerbefehlen umfasst.

Bei weiteren Ausführungsformen des Markierungsmoduls bestimmt die erste Evaluierungseinheit die Ausführungsanforderungen für die Ausführung anhand einer Ausführbarkeit der Steuerbefehle durch einen Knoten der verteilten Daten oder ein Gerät, wobei insbesondere die Ausführungsanforderungen abhängig von einem Ergebnis einer Prüfung einer Ausführbarkeit Steuerbefehle durch einen Knoten des verteilten Datenbanksystem oder der Geräte bestimmt werden.

Gemäß einem weiteren Aspekt betrifft die Erfindung ein Verfahren zum rechnergestützten Steuern von Geräten mit folgenden Verfahrensschritten:
- Zuordnen von Markierungsdatensatzen, wobei
   - jeweils einer der Markierungsdatensätze Steuerbefehlen anhand von Ausführungsanforderungen zugeordnet wird, wenn entsprechende Steuerbefehle die Ausführungsanforderungen erfüllen,
   - die Steuerbefehle, denen einer der jeweiligen Markierungsdatensatz zugeordnet ist, durch Knoten eines verteilten Datenbanksystems (BC) oder durch Geräte ausführbar sind, wobei
   - in den Ausführungsanforderungen gerätespezifische Anforderungen und/oder vorausgesetzte Steuerbefehle gespeichert sind;
- Speichern der jeweiligen Steuerbefehle mit ihrem jeweils zugehörigen Markierungsdatensatz in Steuertransaktionen, wobei
   - die Steuertransaktionen in dem verteilten Datenbanksystems (BC) gespeichert werden;
   - die Steuertransaktionen mittels dem verteilten Datenbanksystems (BC) an die Geräte (D, BCN_D) oder Knoten (BCN, BCN_D) übertragen werden.

Gemäß einem weiteren Aspekt betrifft die Erfindung ein Verfahren zum rechnergestützten Markieren von Steuerbefehle mit folgenden Verfahrensschritten:
- Empfangen (910) oder Abrufen von Steuerbefehlen;
- Zuordnen von Markierungsdatensätzen, wobei
   - jeweils einer der Markierungsdatensätze den Steuerbefehlen anhand von Ausführungsanforderungen zugeordnet wird, wenn entsprechende Steuerbefehle die Ausführungsanforderungen erfüllen,
   - die Steuerbefehle, denen einer der jeweilige Markierungsdatensätze zugeordnet ist, durch Knoten eines verteilten Datenbanksystems oder durch Geräte ausführbar sind,
- in den Ausführungsanforderungen gerätespezifische Anforderungen und/oder vorausgesetzte Steuerbefehle gespeichert sind.

Bei weiteren Ausführungsformen des Verfahrens umfasst das Verfahren weitere Verfahrensschritte um die funktionalen Merkmale oder um weitere Merkmale des Steuersystems zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße verteilte Datenbanksystem und/oder das erste verteilte Datenbanksystem und/oder das Steuersystem und/oder das Gerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße verteilte Datenbanksystem und/oder das erste verteilte Datenbanksystem und/oder das Steuersystem und/oder das Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung;
- Fig. 5: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

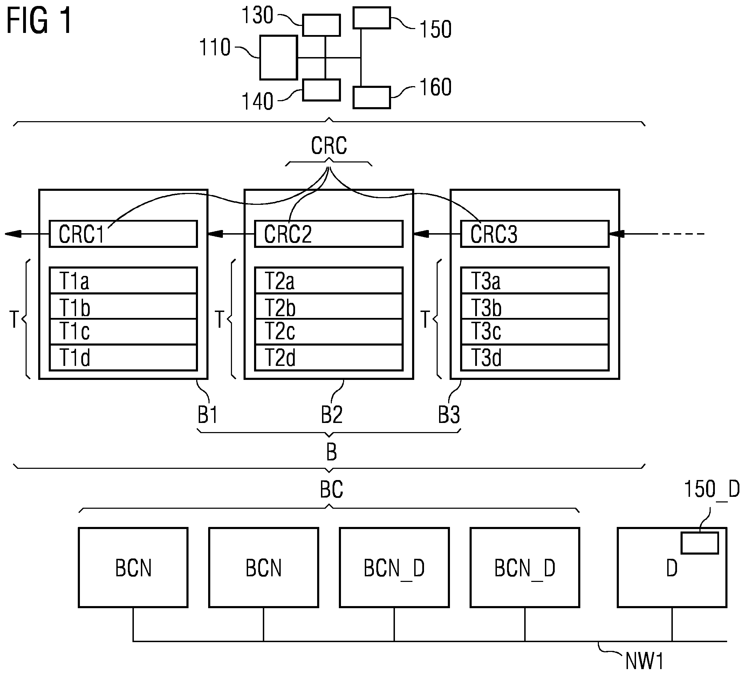

Die Fig. 1 zeigt ein erstes Ausführungsbeispiel der Erfindung. Fig. 1 zeigt dabei ein Steuersystem zum Steuern und/oder Überwachen von Geräten, wobei das verteilte Datenbanksystem beispielsweise mittels einer Blockkette BC realisiert wird.

Das Ausführungsbeispiel für ein Steuersystem zum Steuern und/oder Überwachen von Geräten kann in einer Variante folgende Merkmale umfassen:
- beispielsweise ein verteiltes Datenbanksystem (BC) aufweisend,
   - beispielsweise eine Vielzahl von Knoten (BCN, BCN_D), wobei Knoten (BCN, BCN_D) und Geräte (D, BCN_D) über ein erstes Kommunikationsnetzwerk (NW1) miteinander verbunden sind;
- beispielsweise ein erstes Markierungsmodul (110) zum Zuordnen von Markierungsdatensätzen, wobei
   - beispielsweise jeweils einer der Markierungsdatensätze Steuerbefehlen anhand von Ausführungsanforderungen zugeordnet wird, wenn entsprechende Steuerbefehle die Ausführungsanforderungen erfüllen,
   - beispielsweise die Steuerbefehle, denen einer der jeweiligen Markierungsdatensatz zugeordnet ist, durch die Knoten (BCN, BCN_D) des verteilten Datenbanksystems (BC) oder durch die Geräte (D, BCN_D) ausführbar sind,
   - beispielsweise in den Ausführungsanforderungen gerätespezifische Anforderungen und/oder vorausgesetzte Steuerbefehle gespeichert sind,
- beispielsweise ein erstes Speichermodul (130) zum Speichern der jeweiligen Steuerbefehle mit ihrem jeweils zugehörigen Markierungsdatensatz in Steuertransaktionen, wobei
   - beispielsweise die Steuertransaktionen in dem verteilten Datenbanksystems (BC) gespeichert werden (z. B. in den Datenblöcken des verteilten Datenbanksystems);
   - beispielsweise die Steuertransaktionen mittels dem verteilten Datenbanksystems (BC) an die Geräte (D, BCN_D) oder Knoten (BCN, BCN_D) übertragen werden.
- beispielsweise ein erstes Überprüfungsmodul zum Überprüfen der jeweiligen Markierungsdatensätze für eine Ausführen der Steuerbefehle einer der Steuertransaktionen durch ein entsprechendes Gerät
- beispielsweise ein Ausführungsmodul zum Ausführen der Steuerbefehle durch das entsprechende Gerät abhängig von einem Ergebnis des Überprüfens;
- beispielsweise ein zweites Speichermodul zum Speichern des Ergebnisses des Ausführens der Steuerbefehle in Bestätigungstransaktionen des verteilten Datenbanksystems (z. B. in den Datenblöcken des verteilten Datenbanksystems) .

Im Einzelnen zeigt die Fig. 1 Blöcke B, beispielsweise einen ersten Block B1, einen zweiten Block B2 und einen dritten Block B3, der Blockkette BC.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten BCN, BCN_D realisiert. Bei den Knoten kann es sich beispielsweise um Rechner, Blockkettenorakel, vertrauenswürdige Knoten oder um eines oder mehrere oder alle der Geräte handeln, die gesteuert bzw. überwacht werden sollen. Mit anderen Worten können insbesondere die Geräte entweder als Blockkettenknoten ausgebildet sein, die dann beispielsweise als Geräteknoten BCN D bezeichnet werden. Geräte, die beispielsweise nicht als Blocckettenknoten ausgebildet sind und beispielsweise nur lesend auf die Blockkette zugreifen, werden insbesondere als blocckettenexterne Geräte D bezeichnet. Die Knoten sind über ein erstes Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blockkette repliziert.

Insbesondere können unter Geräten blockkettenexterne Geräte D verstanden werden oder Geräteknoten BCN_D verstanden werden.

Das Steuersystem, das mittels der Blockkette BC realisiert ist, umfasst zudem ein erstes Markierungsmodul 110, ein erstes Speichermodul 130, ein erstes Überprüfungsmodul 140, ein erstes Ausführungsmodul 150 und ein zweites Speichermodul 160, die über das Steuersystem (z. B. einen Bus) oder über die Blockkette und deren Infrastruktur kommunikativ miteinander verbunden sind (z. B. das erste Netzwerk NW1). Das erste (Kommunikations-)Netzwerk NW1 kann dabei ein Mobilfunknetzwerk, ein Ethernet-Netzwerk, ein WAN, ein LAN oder das Internet sein.

Das erste Markierungsmodul 110 ist zum Zuordnen von Markierungsdatensätzen eingerichtet, wobei jeweils einer der Markierungsdatensätze Steuerbefehlen anhand von Ausführungsanforderungen zugeordnet wird, wenn entsprechende Steuerbefehle die Ausführungsanforderungen erfüllen. Dabei sind die Steuerbefehle, denen einer der jeweiligen Markierungsdatensatz zugeordnet ist, durch die Knoten (BCN, BCN_D) des verteilten Datenbanksystems (BC) oder durch die Geräte (D, BCN_D) ausführbar. Dabei sind in den Ausführungsanforderungen gerätespezifische Anforderungen und/oder vorausgesetzte Steuerbefehle gespeichert.

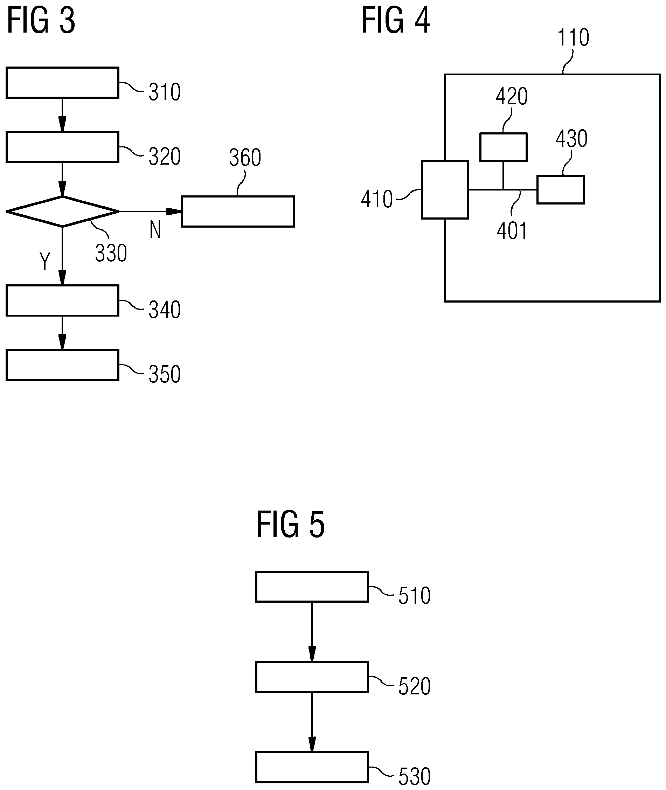

Dabei ist das Markierungsmodul insbesondere ein Markierungsmodul nach einem der Ansprüche 8-18 bzw. Fig. 4 oder Fig. 5.

Alternativ oder zusätzlich können Informationen, ob Steuerbefehle ausführbar sind, auch in einem Markierungsdatensatz gespeichert werden. Hierzu kann der Markierungsdatensatz z. B. den Wert -1 umfassen, der angibt, dass die Ausführung nicht erlaubt ist, den Wert 0 umfassen, der angibt, dass eine Ausführung nicht möglich ist oder den Wert 1 umfassen, der angibt, das die Ausführung erlaubt bzw. möglich ist. Entsprechend kann auch nicht ausführbaren Steuerbefehlen (oder Steuerbefehlen deren Ausführung nicht erlaubt ist) ein Markierungsdatensatz zugeordnet werden, der angibt ob entsprechende Steuerbefehle ausführbar sind oder nicht.

Als Softwarekomponente kann das erste Markierungsmodul 110 beispielsweise als Smart-Contract realisiert sein, der durch die Blockkette bzw. deren Infrastruktur ausgeführt wird. Hierzu ist der Smart-Contract beispielsweise in Transaktionen gespeichert, die wiederum in Datenblöcken oder Blöcken der Blockkette BC gespeichert werden.

Als Hardwarekomponente kann das erste Markierungsmodul 110 beispielsweise durch ein Blockketten-Orakel und/oder einem Knoten und/oder Gerät der Blockkette realisiert werden, die insbesondere beispielsweise vertrauenswürdig sind und mittels eines digitalen Zertifikats oder digitaler Signaturen die Ausführungsanforderungen signieren. In einer Variante ist ein entsprechendes Markierungsmodul bestimmten Geräten oder Knoten zugeordnet, die z. B. als besonders kritisch gelten.

Optional kann das Steuersystem ein erstes Zerlegemodul umfassen, das beispielsweise als integrales Modul des ersten Markierungsmoduls 110 ausgebildet ist oder als separates Modul (z. B. als Software- und/oder Hardwarekomponente) ausgebildet ist - analog zum ersten Markierungsmodul (z. B. als Smart-Contract der Blockkette). Das erste Zerlegemodul ist dazu eingerichtet, eine Befehlsfolge in die entsprechenden Steuerbefehle zu zerlegen und dem Steuersystem, insbesondere dem ersten Markierungsmodul bzw. dem ersten Speichermodul, bereitzustellen.

Die Befehlsfolge kann dabei Steuerbefehle für eine Vielzahl von Geräten, z. B. Fertigungsmaschinen, umfassen, damit diese einen Gegenstand oder ein Produkt, z. B. eine Gasturbine oder einen Elektromotor, erstellen. Alternativ oder zusätzlich umfasst die Befehlsfolge eine Spezifikation des Produkts, die durch die Geräte umgesetzt werden soll. Die Befehlsfolge muss nicht zwangsläufig auf die Fertigung eines Produktes gerichtet sein. Sie kann beispielsweise auch die Steuerung eines Energieversorgungsnetzes sein. Die Befehlsfolge selbst kann dabei beispielsweise ein Smart-Contract sein, der in der Blockkette gespeichert wurde. Dieser Smart-Contract kann dann beispielsweise von dem Steuersystem (bzw. dem ersten Zerlegemodul und/oder dem ersten Markierungsmodul) mit der Blockkette bzw. deren Infrastruktur ausgewertet werden.

Auch kann die Befehlsfolge beispielsweise verschlüsselt sein, sodass das erste Markierungsmodul 110 oder das erste Zerlegemodul die Befehlsfolge zunächst entschlüsseln muss, bevor die Befehlsfolge zerlegt werden kann.

Alternativ oder zusätzlich sind die Steuerbefehle der Befehlsfolge verschlüsselt und entsprechende Anforderungen für deren Ausführung in der Befehlsfolge als Klartext hinterlegt.

Die Befehlsfolge selbst und/oder die Steuerbefehle können dabei beispielsweise dem Steuersystem durch einen Nutzer, durch eine Schnittstelle, durch eine andere Datenbank oder durch ein Eingabegerät bereitgestellt werden.

Alternativ oder zusätzlich werden die Steuerbefehle und/oder die Ausführungsanforderungen durch das erste Markierungsmodul 110 verschlüsselt, um beispielsweise einen Know-How-Schutz zu realisieren. Beispielsweise umfassen dann das entsprechende Gerät D zum Ausführen der Steuerbefehle und/oder das erste Überprüfungsmodul 140 und/oder das erste Ausführungsmodul 150, 150_D über entsprechende kryptographische Mittel. Beispielsweise sind die kryptographischen Mittel ein entsprechender kryptographischen Schlüssel, um die Steuerbefehle und/oder die Ausführungsanforderungen zu entschlüsseln.

Das erste Zerlegemodul und das erste Markierungsmodul zerlegen zunächst die Befehlsfolge in Steuerbefehle oder bestimmen die Steuerbefehle anhand der Befehlsfolge, wobei die Steuerbefehle auch eine Gruppe von Steuerbefehlen oder mehrere Steuerbefehle sein können. Das erste Markierungsmodul 110 kennt vorzugsweise die verfügbaren Geräte und/oder Knoten und bestimmt für die Steuerbefehle (die auch eine Gruppe von Steuerbefehlen sein können) Ausführungsanforderungen. Alternativ können die Ausführungsanforderungen bereits in der Befehlsfolge kodiert/gespeichert sein und das erste Markierungsmodul 110 bestimmt anhand dieser Information die Ausführungsanforderungen für die entsprechenden Steuerbefehle.

Zusätzlich kann das Steuersystem einen Optimierer umfassen, der anhand der Ausführungsanforderungen eine Ausführung der Steuerbefehle durch die Geräte anhand eines vorgegebenen Kriteriums optimiert. Alternativ bestimmt der Optimierer die Ausführungsanforderungen und stellt sie dem ersten Markierungsmodul 110 bereit.

Das Steuersystem ist dadurch beispielsweise in der Lage, einen Fertigungsprozess nach den vorgegebenen Kriterien zu optimieren. Die vorgegebenen Kriterien können beispielsweise die Fertigungszeit, die verursachten Kosten oder die aufzuwendende Energie sein. Der Optimierer kann beispielsweise ein integrales Modul des ersten Zerlegemoduls oder des ersten Markierungsmodul sein. Alternativ kann der Optimierer als eigenständiges Modul des Steuersystems ausgebildet sein.

Ist der Optimierer beispielsweise ein integrales Modul des Zerlegemoduls oder des Markierungsmodul kann er beim Zerlegen der Befehlsfolge in Steuerbefehle und beim Bestimmen der Ausführungsanforderungen die Optimierung vornehmen. Dabei berücksichtigt das erste Zerlegemodul oder das erste Markierungsmodul 110 mittels des Optimierers, beispielsweise beim Zerlegen der Befehlsfolge in die Steuerbefehle, das vorgegebene Kriterium.

Ist beispielsweise das Kriterium, die Fertigungszeit bei der Produktion eines Produktes zu optimieren (z. B. Fertigungszeit für das Produkt möglichst gering zu halten), wird die Befehlsfolge derart zerlegt und/oder entsprechend optimierte Ausführungsanforderungen berechnet, dass die Einzelkomponenten des Produktes parallel von mehreren Geräten hergestellt werden - also die entsprechenden Steuerbefehle in Steuertransaktionen von diesen abgearbeitet werden. Ist beispielsweise das Kriterium, die Fertigungskosten bei der Produktion eines Produktes zu optimieren, wird die Befehlsfolge derart zerlegt und/oder entsprechend optimierte Ausführungsanforderungen berechnet, dass die Einzelkomponenten seriell von einem Gerät (z. B. dem entsprechenden Gerät) oder möglichst wenigen Geräten hergestellt werden - also die entsprechenden Steuerbefehle in Steuertransaktionen von den entsprechenden Knoten/Geräten abgearbeitet werden. Um dies zu steuern, werden beispielsweise durch den Optimierer die entsprechenden Informationen an das Markierungsmodul übergeben, sodass das Markierungsmoduldiese Informationen in den Ausführungsanforderungen hinterlegt.

In einer Variante ist das Markierungsmodul ein Markierungsmodul für ein verteiltes Datenbanksystem oder für ein Steuersystem mit einem verteilten Datenbanksystem zum Steuern und/oder Überwachen von Geräten. In dieser Variante weist es einen Prozessor und optional eine Speichereinheit auf. Der Prozessor ist zum zuordnen von Markierungsdatensätzen für eine Ausführung von Steuerbefehlen durch die Geräte eingerichtet, wobei eine Zuordnung nur erfolgt, wenn die Ausführungsanforderungen durch entsprechende Geräte erfüllt sind. Zusätzlich kann es beispielsweise die Ausführungsvarianten und die genannten Merkmale aus den Fig. 4 und 5 umfassen.

Die entsprechenden Markierungsdatensätze können beispielsweise für die jeweiligen Geräte oder Knoten, die die Steuerbefehle bzw. Steuertransaktionen ausführen sollen, auch einen Identifizierer umfassen, damit diese Information (Identifizierung und Angabe der Ausführbarkeit) beim Überprüfen durch die Geräte und/oder Knoten erleichtert wird.

Das erste Markierungsmodul kann beispielsweise in einer Variante ein erstes Zuordnungsmodul umfassen. Dabei ist das erste Zuordnungsmodul zum Zuordnen der jeweiligen Markierungsdatensätze zu den Steuerbefehlen eingerichtet. Das erste Zuordnungsmodul kann beispielsweise als Software- und/oder Hardwarekomponente ausgebildet sein - analog zum ersten Markierungsmodul 110 (z. B. als Smart-Contract der Blockkette oder als vertrauenswürdige Knoten der Blockkette). Das erste Zuordnungsmodul kann insbesondere durch die Blockkette bzw. einem Smart-Contract realisiert werden oder ist eine Softwarekomponente der Blockketten-Infrastruktur.

Das erste Speichermodul 130 ist zum Speichern der jeweiligen Steuerbefehle mit ihrem jeweils zugehörigen Markierungsdatensatz in Steuertransaktionen, wobei die Steuertransaktionen in Datenblöcken B des verteilten Datenbanksystems (BC) gespeichert werden. Die Steuertransaktionen werden dabei beispielsweise mittels der Datenblöcke B an die Geräte D, BCN D übertragen. Dies erfolgt beispielsweise dadurch, dass die entsprechenden Datenblöcke durch die Blockkette über das erste Netzwerk NW1 an die entsprechenden Knoten übertragen werden, z. B. wenn die Datenblöcke für die Blockkette und/oder Knoten und/oder spezifische Knoten repliziert werden. Handelt es sich beispielsweise um ein blockketten-externes Gerät, so kann dieses beispielsweise über eine Schnittstelle (z. B. ein Web-Interface) der Blockkette an ein solches Gerät übertragen werden oder ein solches Gerät ruft die entsprechenden Daten selbst von der Blockkette ab z. B. nach einem vorgegebenen Zeitintervall.

Es können die Steuerbefehle und der zugehörige Markierungsdatensatz dabei in zwei voneinander verschiedenen Steuertransaktionen gespeichert werden oder in einer einzigen Steuertransaktion gespeichert werden.

Vorzugsweise werden beim Bestimmen der Steuerbefehle durch das erste Markierungsmodul 110 diese gerätespezifisch bestimmt. Das bedeutet insbesondere, dass zunächst Gruppen von Steuerbefehlen gebildet werden, die vollständig von einem entsprechenden Gerät abgearbeitet werden können. Diesen Gruppen von Steuerbefehlen können auch einfach nur Steuerbefehle genannt werden. Für diese Gruppen von Steuerbefehlen bzw. Steuerbefehle werden dann die Ausführungsvoraussetzungen berechnet. Alternativ oder zusätzlichen können die Ausführungsvoraussetzungen oder ein Teil von diesen auch vorgegeben sein und z. B. in einem/dem Konfigurationsspeicher hinterlegt sein. Eine Zuordnung eines Markierungsdatensatzes, der eine Ausführung der Steuerbefehle erlaubt, erfolgt insbesondere nur, wenn die Ausführungsvoraussetzungen für die Steuerbefehle erfüllt sind. Entsprechend kann auch ein Markierungsdatensatz in Steuertransaktionen gespeichert werden, der eine Ausführung von Steuerbefehlen untersagt, indem ein entsprechender Markierungsdatensatz eine entsprechende Angabe umfasst (z. B. "Execution = Not Allowed").

Es kann sich bei dem Markierungsmodul beispielsweise auch um ein erfindungsgemäßes Markierungsmodul oder eine seiner Ausführungsformen bzw. ein Markierungsmodul, wie es in den Fig. 4 und/oder 5 erläutert wird.

Das Speichern kann auf unterschiedliche Weise realisiert werden. Beispielsweise kann ein Steuerbefehl oder mehrere Steuerbefehle in einer spezifischen Steuertransaktion gespeichert werden, wobei diese spezifische Steuertransaktion die entsprechenden Markierungsdatensätze für den Steuerbefehl oder die mehreren Steuerbefehle umfasst. Dieser integrale Ansatz ist vorteilhaft, um auf die Daten möglichst einfach zuzugreifen.

Alternativ können die entsprechenden Markierungsdatensätze in einer eigenen bzw. separaten Steuertransaktion gespeichert sein, wobei die eigene Transaktion eine Referenz oder einen Hinweis umfasst, auf welchen Steuerbefehl oder welche Steuerbefehle sich diese entsprechende Markierungsdatensätze beziehen. Dies erfolgt beispielsweise mit einer Blocknummer (eines Blocks) mit den entsprechenden (Steuer-)Transaktionen (mit Steuerbefehlen), eine Prüfsumme des Blocks oder der Transaktion, der/die die Steuerbefehle umfasst. Dies ist vorteilhaft, wenn die Markierungsdatensätze erst während der Abarbeitung der Steuerbefehle durch die entsprechenden Geräte bestimmt werden. Ein Gerät (bzw. das erste Überprüfungsmodul 140 bzw. das erste Ausführungsmodul 150), z. B. das entsprechende Gerät, das die Steuerbefehle oder einen Teil der Steuerbefehle einer Steuertransaktion abarbeitet, beginnt eine Abarbeitung der entsprechenden Steuerbefehle erst, wenn die entsprechenden Markierungsdatensätze in einer Steuertransaktion in der Blockkette verfügbar sind. Andernfalls wartet das Gerät bzw. das erste Überprüfungsmodul 140 bzw. das erste Ausführungsmodul 150 bis diese Steuertransaktion mit den entsprechenden Markierungsdatensätze durch die Blockkette BC bereitgestellt werden.

Das erste Speichermodul 130 kann beispielsweise als Software- und/oder Hardwarekomponente ausgebildet sein - analog zum ersten Markierungsdatensätze 110 (z. B. als Smart-Contract der Blockkette oder als vertrauenswürdige Knoten der Blocckette). Das erste Speichermodul 130 kann insbesondere durch die Blockkette bzw. einem Smart-Contract realisiert werden oder ist eine Softwarekomponente der Blockketten-Infrastruktur.

Das erste Überprüfungsmodul 140 ist zum Überprüfen eingerichtet, ob für eine jeweilige Steuertransaktion bzw. Steuerbefehl ein passender Markierungsdatensatz vorhanden ist. Das Überprüfungsmodul 140 überprüft dann den Markierungsdatensatz, ob dieser z. B. die Ausführbarkeit für die Steuerbefehle bestätigt. Diese Informationen werden dann vorzugsweise in einem Prüfergebnis zusammengefasst und dem Ausführungsmodul 150 bereitgestellt.

Dabei ist insbesondere mit "einem der Steuerbefehle" ein oder mehrere der Steuerbefehle gemeint (sprich es handelt sich z. B. um einen oder mehrere Steuerbefehle). Alternativ ist unter "mit einem der Steuerbefehle", "mindestens einen der Steuerbefehl" zu verstehen. Bei "einem der Steuerbefehle" handelt es sich vorzugsweise um die Steuerbefehle einer entsprechenden Steuertransaktion.

Das erste Überprüfungsmodul 140 kann beispielsweise als Software- und/oder Hardwarekomponente ausgebildet sein - analog zum ersten Markierungsmodul 110 (z. B. als Smart-Contract der Blockkette oder als vertrauenswürdige Knoten der Blockkette). Das erste Überprüfungsmodul 140 kann insbesondere durch die Blockkette bzw. einem Smart-Contract realisiert werden oder ist eine Softwarekomponente der Blockketten-Infrastruktur oder ist eine Komponente eines Knotens oder eines Gerätes, das die Steuerbefehle ausführen kann.

Ist die Überprüfung der Steuerbefehle eines Datenblocks, die durch das entsprechende Gerät ausgeführt werden sollen, durch das erste Überprüfungsmodul 140 abgeschlossen, so wird ein Ergebnis der Prüfung in einem Datensatz bereitgestellt. Das erste Überprüfungsmodul 140 kann beispielsweise noch zusätzliche Überprüfungen durchführen. Beispielsweise können die Transaktionsprüfsumme oder die Datenblockprüfsumme überprüft werden. Handelt es sich bei einer entsprechenden Prüfsumme um eine digitale Signatur oder ein Zertifikat, so kann beispielsweise überprüft werden, ob der Ausstellende bzw.

Prüfsummenerzeuger überhaupt berechtigt ist, dass seine Steuerbefehle auf dem Gerät bzw. durch das Gerät abgearbeitet werden.

Es kann beispielsweise auch überprüft werden, ob das entsprechende Gerät über ein gefordertes digitales Zertifikat verfügt, das beispielsweise aussagt, dass das entsprechende Gerät vertrauenswürdig ist. Dies kann beispielsweise notwendig sein, wenn es sich um Steuerbefehle handelt, die Know-How umfassen, das nicht öffentlich zugänglich gemacht werden soll.

Es ist beispielsweise auch denkbar, dass die Steuerbefehle kryptographisch verschlüsselt sind und vorzugsweise nur das entsprechende Gerät D Mittel umfasst (z. B. einen entsprechenden Schlüssel), diese kryptographische Verschlüsselung aufzuheben. Diese Mittel kann das entsprechende Gerät D selbst umfassen oder das Ausführungsmodul 150, 150_D umfasst diese Mittel.

Das Ausführungsmodul 150, 150_D ist zum Ausführen der Steuerbefehle durch das entsprechende Gerät abhängig von dem Ergebnis des Überprüfens eingerichtet (z. B. dem Prüfergebnis). Ergibt die Überprüfung bzw. umfasst das Ergebnis eine Bestätigung für das Ausführen der Steuerbefehle, führt das entsprechende Gerät diese Steuerbefehle aus. Es kann beispielsweise in eine Komponente ein Loch bohren entsprechend der Spezifikationen der Steuerbefehle, die ursprünglich in der Befehlsfolge spezifiziert wurden. Ergibt die Überprüfung bzw. umfasst das Ergebnis keine Bestätigung für das Ausführen der Steuerbefehle, so wird eine Abarbeitung/Ausführung der Steuerbefehle unterbunden.

Sagt das Ergebnis beispielsweise aus, dass die Steuerbefehle nicht durch das entsprechende Gerät ausgeführt werden sollen, kann beispielsweise ein Steuersignal bereitgestellt werden. Mit dem Steuersignal können beispielsweise ein Alarm, ein Servicetechniker oder die Steuerbefehle (vorzugsweise alle), die anhand einer Befehlsfolge erzeugt wurden, für ungültig erklärt werden, sodass andere Steuerbefehle der Befehlsfolge nicht mehr durch andere Geräte ausgeführt werden. Hierfür kann beispielsweise eine entsprechende Steuertransaktion mit einem solchen Steuerbefehl für alle Geräte einem Block der Blockkette BC gespeichert werden und an die Geräte mittels der Blockkette BC übermittelt werden. Eine solche Steuertransaktion umfasst vorzugsweise ebenfalls Ausführungsanforderungen, die eine Priorität umfassen. Diese Priorität ist vorzugsweise höher als eine Priorität der übrigen Steuerbefehle. Mit dieser erhöhten Priorität wird die entsprechende Steueranweisung bevorzugt von den Geräten abgearbeitet, um beispielsweise die restlichen Steuerbefehle der Befehlsfolge zu invalidieren (für ungültig erklären) bzw. deren Ausführung zu unterbinden.

Ist das erste Überprüfungsmodul 140 beispielsweise ein Modul der Blockkette BC, so umfasst das erste Überprüfungsmodul 140 beispielsweise eine Liste der Geräte mit ihren gerätespezifischen Eigenschaften, anhand derer die gerätespezifischen Anforderungen überprüft werden können. Alternativ kann das erste Überprüfungsmodul 140 eine Liste der Geräte und ihre Netzwerkadressen umfassen, und die entsprechenden gerätespezifischen Eigenschaften bei den Geräten selbst abfragen. Dies ist vorteilhaft, um den aktuellen Betriebszustand der Geräte bei der Überprüfung zu berücksichtigen.

Das erste Ausführungsmodul 150, 150_D kann beispielsweise als Software- und/oder Hardwarekomponente ausgebildet sein - analog zum ersten Markierungsmodul 110 (z. B. als Smart-Contract der Blockkette oder als vertrauenswürdige Knoten der Blocckette). Das Ausführungsmodul kann insbesondere durch die Blockkette bzw. einen Smart-Contract realisiert werden oder ist eine Softwarekomponente der Blockketten-Infrastruktur oder ist eine Komponente eines Knotens (z. B. ein Blockkettenausführungsmodul 150) oder eines Gerätes (z. B. ein Geräte-ausführungsmodul 150_D), das die Steuerbefehle ausführen kann.

Ist das erste Ausführungsmodul beispielsweise ein Modul der Blockkette, so umfasst das erste Ausführungsmodul 150 beispielsweise eine Liste der Geräte und deren Netzwerkadressen, um die Geräte für das Abarbeiten der Steuerbefehle anzusteuern.

Das zweite Speichermodul 160 ist zum Speichern des Ergebnisses des Ausführens der Steuerbefehle in Bestätigungstransaktionen der Datenblöcke des verteilten Datenbanksystems eingerichtet.

War die Abarbeitung der Steuerbefehle durch das entsprechende Gerät erfolgreich, so wird diese Information in einer Bestätigungstransaktion in der Blockkette gespeichert. Gibt es beispielsweise andere Steuerbefehle, die eine Abarbeitung der nun abgearbeiteten Steuerbefehle voraussetzen (vorausgesetzte Steuerbefehle), können nun diese anderen Steuerbefehle durch ein anderes entsprechendes Gerät oder das gleiche entsprechende Gerät abgearbeitet werden, sofern auch die restlichen Ausführungsanforderungen erfüllt sind. Alternativ oder zusätzlich können den Steuerbefehlen, die bisher nicht ihre entsprechenden Ausführungsvoraussetzungen (z. B. die abgearbeiteten Steuerbefehle voraussetzen, die aber bei einem ersten Zuordnungsversuch noch nicht abgearbeitet waren) erfüllt haben, entsprechende Markierungsdatensätze zugeordnet werden, wenn nun die abgearbeiteten vorausgesetzten Steuerbefehle in Bestätigungstransaktionen gespeichert sind (also verfügbar sind).

Das zweite Speichermodul 160 kann beispielsweise als Software- und/oder Hardwarekomponente ausgebildet sein - analog zum ersten Markierungsmodul 110 (z. B. als Smart-Contract der Blockkette oder als vertrauenswürdige Knoten der Blockkette). Das zweite Speichermodul 160 kann insbesondere durch die Blockkette bzw. einem Smart-Contract realisiert werden oder ist eine Softwarekomponente der Blockketten-Infrastruktur oder ist eine Komponente eines Knoten, das die Steuerbefehle ausführen kann.

Das Steuersystem und/oder die verteilte Datenbanksystem bzw. seine Knoten (z. B. Blockketten-Knoten, Geräte (Geräteknoten und blockkettenexterne Geräte)) können beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN) ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über die Blockkette bzw. deren Infrastruktur miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Je nach gewählter Implementierungsvariante kann das verteilte Datenbanksystem das erste Überprüfungsmodul und/oder das erste Ausführungsmodul und/oder das zweite Speichermodul umfassen.

In dieser Implementierungsvariante sind die Geräte einfach gehalten - z. B. ohne derartig korrespondierende Module. Dies ist vorteilhaft, um die Geräte möglichst einfach zu gestalten und an das verteilte Datenbanksystem anzubinden. Dadurch können insbesondere kostengünstige Geräte eingesetzt werden.

In einer weiteren Implementierungsvariante umfassen die Geräte ein erstes Geräte-Überprüfungsmodul und/oder ein erstes Geräte-Ausführungsmodul und/oder ein zweites Geräte-Speichermodul. Je nach gewählter Implementierung können das erste Überprüfungsmodul und/oder das erste Ausführungsmodul und/oder ein zweite Speichermodul bei der Realsierung ihrer Funktionalitäten/Aufgaben auf die korrespondierenden Module der Geräte zugreifen.

Mit anderen Worten kennt das Steuersystem bzw. das verteilte Datenbanksystem die Gerätemodule (z. B. mittels in einer Tabelle gespeicherten Daten). Das erste Überprüfungsmodul 140 und/oder das erste Ausführungsmodul 150 und/oder das zweite Speichermodul 160 verfügen über Informationen, wie die Gerätemodule 150_D angesprochen bzw. angesteuert werden können (z. B. über eine modulinterne Tabelle, die sich vorzugsweise automatisch aktualisiert beispielsweise über Broadcast-Nachrichten im ersten Kommunikationsnetzwerk NW1 oder über das verteilte Datenbanksystem BC). Das erste Überprüfungsmodul und/oder das erste Ausführungsmodul und/oder das zweite Speichermodul implementieren dabei vorzugsweise nur den Teil, der die notwendigen Informationen bzw. Aufgaben an das entsprechende Gerät bzw. die entsprechenden Geräte verteilt bzw. übermittelt (z. B. die Steuertransaktionen oder die Bestätigungstransaktionen oder das Ergebnis des Überprüfens durch das Überprüfungsmodul). Die restliche Funktionalität wird durch die Gerätemodule realisiert.

Dies ist dahingehend vorteilhaft, um rechenintensivere Überprüfungsaufgaben durch das erste Überprüfungsmodul oder Ausführungsaufgaben durch das erste Ausführungsmodul ganz oder teilweise auf die entsprechenden Geräte auszulagern.

Auch kann das Steuersystem noch ein optionales Registrierungsmodul umfassen.

Das Registrierungsmodul kann beispielsweise als Software- und/oder Hardwarekomponente ausgebildet sein - analog zum ersten Markierungsmodul 110 (z. B. als Smart-Contract der Blockkette oder als vertrauenswürdige Knoten der Blockkette). Das Registrierungsmodul kann insbesondere durch die Blockkette bzw. einen Smart-Contract realisiert werden oder ist eine Softwarekomponente der Blockketten-Infrastruktur. Alternativ kann das Registrierungsmodul als spezifischer vertrauenswürdiger Knoten realisiert sein, dessen Netzwerkadresse beispielsweise öffentlich bekannt ist. Handelt es sich beispielsweise um ein geschlossenes verteiltes Datenbanksystem, bei dem nur berechtigte Knoten und/oder Geräte an das Steuersystem bzw. an das verteilte Datenbanksystem angebunden werden, so ist insbesondere ausschließlich die Netzwerkadresse des Registrierungsmoduls öffentlich bekannt.

Das Registrierungsmodul ist dazu eingerichtet neue Knoten und/oder Geräte dem Steuersystem hinzuzufügen. Sobald ein neues Gerät und/oder Knoten dem Steuersystem bzw. dem verteilten Datenbanksystem beitreten möchte, wird durch das neue Gerät oder durch den neuen Knoten eine Anfrage an das Registrierungsmodul gesendet. Dies kann direkt erfolgen, indem beispielsweise Knoten- und/oder Geräteinformationen direkt an das Registrierungsmodul übermittelt werden. Erfolgt dies indirekt wird die Anfrage zwischen den Knoten und Modulen des verteilten Datenbanksystems weitergeleitet bis die Anfrage das Registrierungsmodul erreicht.

Die Knoten- und/oder Geräteinformationen können dabei folgendes umfassen:
- Geräteadresse/Knotenadresse
- Betreiber des Gerätes/Knotens
- Funktionsumfang des Gerätes/Knotens
- kryptographische Schlüssel (z. B. zum Überprüfen von Prüfsummen/digitalen Signaturen, die durch das Gerät/den Knoten erzeugt wurden)
- weitere Eigenschaften, die bei der Überprüfung der Ausführungsanforderungen benötigt werden
   Die Knoten- und/oder Geräteinformationen können dann beispielsweise im Steuersystem (z. B. in entsprechenden Tabellen) gespeichert werden, damit das Überprüfen und/oder das Ausführen der Steuerbefehle bzw. Steuertransaktionen durch die entsprechenden Module realisiert werden kann.

Handelt es sich bei dem Datenbanksystem beispielsweise um ein geschlossenes verteiltes Datenbanksystem, überprüft das Registrierungsmodul auch, ob das Gerät/der Knoten zugangsberechtigt ist - also ob insbesondere das Gerät/der Knoten als Teil des Steuersystems bzw. des verteilten Datenbanksystems akzeptiert ist. Hierfür stellt das Gerät/der Knoten beispielsweise Authentifizierungsinformationen (kryptographische Schlüssel, Passwörter, usw.) bereit, die durch das Registrierungsmodul überprüft werden.

Handelt es sich bei dem Datenbanksystem beispielsweise um ein offenes verteiltes Datenbanksystem, so werden beispielsweise die Knoten- und/oder Geräteinformationen erfasst.

Je nach Implementierungsvariante sind das Überprüfungsmodul 140 und/oder das Ausführungsmodul 150 und/oder das zweite Speichermodul 160 optionale Module.

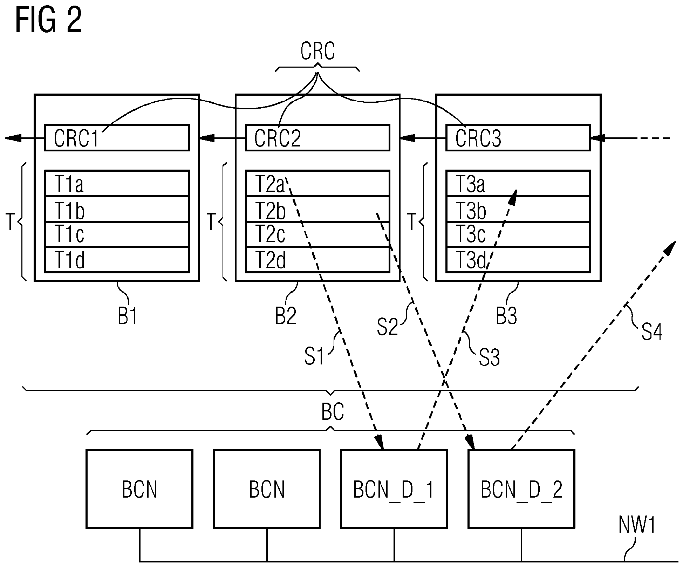

Die Fig. 2 zeigt ein zweites Ausführungsbeispiel der Erfindung, das eine Steuerung von Geräten implementiert, die als Knoten der Blockkette BC realisiert sind.

Diese Variante kann beispielsweise auch durch das Ausführungsbeispiel von Fig. 1 realisiert werden bzw. ist mit dieser kompatibel. Entsprechend kann das Steuersystem aus Fig. 2 ebenfalls eines oder mehrere Module des Steuersystems aus Fig. 1 aufweisen.

Durch das Steuersystem, das als Blockkette BC realisiert ist, werden mehrere Transaktionen T bereitgestellt, die auch Steuertransaktionen umfassen können.

Beispielsweise handelt es sich bei der fünften Transaktion T2a um eine erste Steuertransaktion, die erste Steuerbefehle und einen diesen Steuerbefehlen zugeordneten ersten Markierungsdatensatz umfasst. Bei der sechsten Transaktion T2b handelt es sich beispielsweise um eine zweite Steuertransaktion, die zweite Steuerbefehle und einen diesen Steuerbefehlen zugeordneten zweiten Markierungsdatensatz umfasst. Der erste Markierungsdatensatz gibt an, dass die ersten Steuerbefehle durch den ersten Geräteknoten BCN_D_1 ausgeführt werden können. Der zweite Markierungsdatensatz gibt hierbei an, dass die zweiten Steuerbefehle von dem zweiten Geräteknoten BCN_D_2 ausgeführt werden können. Hierzu können die jeweiligen Markierungsdatensätze beispielsweise einen eindeutigen Identifizierer für die entsprechenden Geräte oder Geräteknoten umfassen, welche die Steuerbefehle ausführen sollen. Alternativ oder zusätzlich können die entsprechenden Steuerbefehle einen solchen eindeutigen Identifizierer für die entsprechenden Geräte oder Geräteknoten umfassen, welche die Steuerbefehle ausführen sollen.

Mit anderen Worten wird durch die Erfindung das verteilte Datenbanksystem dahingehend verbessert, dass die Sicherheit der Ausführung von Steuerbefehlen durch die Geräte und/oder Knoten erhöht wird. Da der Markierungsdatensatz vorzugsweise nur sehr wenige Informationen umfasst (z. B. den eindeutigen Identifizierer und/oder eine Angabe, dass die entsprechenden Steuerbefehle ausführbar sind oder nicht), ist für diese Informationen wenig Speicherplatz notwendig. Dies ist insbesondere bei eine blockkettenbasierten Implementierung vorteilhaft, um den gesamten Speicherverbrauch bzw. Speicherbelegung des verteilten Datenbanksystems möglichst gering zu halten. Andere Lösungen, die beispielsweise die gesamten Ausführungsanforderungen (z. B. Abhängigkeiten bei der Ausführung von Steuerbefehlen, Gerätespezifikationen, verschlüsselte Daten, Angaben zur Optimierung der Steuerbefehle usw.) in den Transaktionen speichern, sind hinsichtlich eines großen Speicherplatzverbrauches nachteiligt, da besonders bei einer Nutzung von Kommunikationsverbindungen mit geringer Bandbreite, das Abrufen der Ausführungsanforderungen zu lange dauern würde, um sinnvoll ein Gerät anzusteuern bzw. zu steuern. Entsprechend umfasst ein Markierungsdatensatz vorzugsweise ausschließlich den eindeutigen Identifizierer (für das Gerät/Knoten das die Steuerbefehle ausführen soll) und/oder eine Angabe, dass die entsprechenden Steuerbefehle ausführbar sind, und/oder eine Angabe, dass die entsprechenden Steuerbefehle nicht ausführbar sind.

In einem ersten Schritt S1 werden die ersten Steuerbefehle der ersten Steuertransaktion durch die Blockkette an den ersten Geräteknoten BCN_D_1 übermittelt und durch den ersten Geräteknoten BCN_D_1 ausgeführt, wenn der entsprechende Markierungsdatensatz dies erlaubt. Nach erfolgreicher Abarbeitung der ersten Steuerbefehle durch den ersten Geräteknoten BCN_D_1 wird hierfür in einem zweiten Schritt S2 eine Bestätigung über diese Abarbeitung in eine Bestätigungstransaktion geschrieben und in einem Datenblock der Blockkette gespeichert. Dies ist in diesem Ausführungsbeispiel die neunte Transaktion T3a.

Unter einem Geräteknoten ist hierbei insbesondere ein Knoten der Blockkette zu verstehen, der zugleich ein Gerät ist oder Geräteeigenschaften aufweist, um Steuerbefehle abzuarbeiten.

Mit der Erfindung können auf einfache Weise komplexe Steuerbefehlsketten (auch Befehlsfolgen genannt) in einem (Automatisierungs-)Netzwerk, bei welchem Knoten und/oder Geräteknoten und/oder blockkettenexternen Geräte miteinander vernetzt sind, abgearbeitet werden, selbst wenn sich unterschiedliche Betreiber der einzelnen Knoten und Geräte nicht vertrauen. Insbesondere erfolgt durch das verteilte Datenbanksystem bzw. die Blockkette eine Prüfung der Steuerbefehle, ob diese überhaupt ausführbar sind. Sollten beispielsweise die Steuerbefehle und/oder der entsprechende Markierungsdatensatz keinen entsprechenden eindeutigen Identifizierer für das Gerät/Knoten umfassen, das die Steuerbefehle ausführen soll, kann das verteilte Datenbanksystem selbst anhand eines eindeutigen Identifizierers (z. B. eine Seriennummer oder eine Inventarnummer) des entsprechenden Gerätes/Knotens diesen identifizieren und die entsprechenden Steuertransaktionen mit den Steuerbefehlen und dem entsprechenden Markierungsdatensatz an das Gerät/Knoten übermitteln. Hierzu kann das verteilte Datenbanksystem beispielsweise ein Geräteregister umfassen, das die entsprechenden Informationen für die Geräte/Knoten umfasst, um diese zu identifizieren und die entsprechenden Daten an diese zu übermitteln.

Ein nicht dargestelltes Ausführungsbeispiel der Erfindung betrifft ein Gerät, so wie es in der Fig. 1 oder der Fig. 2 mit den zugehörigen Ausführungsbeispielen erläutert wurde.

Das Gerät umfasst ein erstes Kommunikationsmodul, ein optionales erstes Überprüfungsmodul, ein optionales erstes Ausführungsmodul und ein zweites Speichermodul, die über einen Bus miteinander kommunikativ in Verbindung stehen. Ein Bus kann hierbei auch ein einfacher Programmfluss oder ein Datenaustausch zwischen den entsprechenden Komponenten sein.

Das Gerät kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den Bus miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Kommunikationsmodul, beispielsweise eine Ethernet-Schnittstelle, ist zum Empfangen von Datenblöcken eines verteilten Datenbanksystems (beispielsweise einer Blockkette) eingerichtet, wobei
- Steuertransaktionen mit Steuerbefehlen für das Gerät in den Datenblöcken des verteilten Datenbanksystems gespeichert sind,
- die Steuertransaktionen den Steuerbefehlen zugeordnete Markierungsdatensätze umfassen.

Das erste Überprüfungsmodul ist zum Überprüfen der jeweiligen Markierungsdatensätze für ein Ausführen der Steuerbefehle einer der Steuertransaktionen durch ein entsprechendes Gerät eingerichtet.

Das erste Ausführungsmodul ist zum Ausführen der Steuerbefehle durch das entsprechende Gerät abhängig von einem Ergebnis des Überprüfens eingerichtet.

Das zweite Speichermodul ist zum Speichern des Ergebnisses des Ausführens der Steuerbefehle in Bestätigungstransaktionen der Datenblöcke des verteilten Datenbanksystems eingerichtet.

Die Module können beispielsweise als Hardwarekomponente oder als Softwarekomponente oder eine Kombination aus Hardware- und Softwarekomponenten realisiert werden. Beispielsweise können Softwarekomponenten wie Programmbibliotheken genutzt werden, um mit Programmgebefehlen der Programmbibliotheken den Prozessor derart zu konfigurieren, dass dieser die Funktionalitäten eines entsprechenden Moduls realisiert.

Das Gerät selbst kann ein Knoten einer Blockkette bzw. eines verteilten Datenbanksystems sein.

Weist das Gerät beispielsweise das erste Überprüfungsmodul und/oder das erste Ausführungsmodul auf, ist dies dahingehend vorteilhaft, um rechenintensivere Überprüfungsaufgaben durch das Steuersystem (Fig. 1 - 2) oder dem verteilten Datenbanksystem (Fig. 4) ganz oder teilweise auf das Gerät oder mehrere mit dem Gerät gleichartige Geräte auszulagern.

Die Fig. 3 zeigt ein drittes Ausführungsbeispiel der Erfindung als Ablaufdiagramm des erfindungsgemäßen Verfahrens.

Das Verfahren ist vorzugsweise rechnergestützt realisiert.

Das Ausführungsbeispiel für ein Verfahren zum rechnergestützten Steuern von Geräten kann in einer Variante folgende Verfahrensschritte umfassen:
- Zuordnen von Markierungsdatensatzen, wobei
   - jeweils einer der Markierungsdatensätze Steuerbefehlen anhand von Ausführungsanforderungen zugeordnet wird, wenn entsprechende Steuerbefehle die Ausführungsanforderungen erfüllen,
   - die Steuerbefehle, denen einer der jeweiligen Markierungsdatensatz zugeordnet ist, durch Knoten eines verteilten Datenbanksystems (BC) oder durch Geräte ausführbar sind, wobei
   - in den Ausführungsanforderungen gerätespezifische Anforderungen und/oder vorausgesetzte Steuerbefehle gespeichert sind;
- Speichern der jeweiligen Steuerbefehle mit ihrem jeweils zugehörigen Markierungsdatensatz in Steuertransaktionen, wobei
   - die Steuertransaktionen in dem verteilten Datenbanksystems (BC) gespeichert werden;
   - die Steuertransaktionen mittels dem verteilten Datenbanksystems (BC) an die Geräte (D, BCN_D) oder Knoten (BCN, BCN_D) übertragen werden (z. B. mittels der Datenblöcke des verteilten Datenbanksystems in denen die Steuertransaktionen gespeichert sind)
- Überprüfen der jeweiligen Markierungsdatensätze für eine Ausführen der Steuerbefehle einer der Steuertransaktionen durch ein entsprechendes Gerät;
- Ausführen der Steuerbefehle durch das entsprechende Gerät abhängig von einem Ergebnis des Überprüfens;
- Speichern des Ergebnisses des Ausführens der Steuerbefehle in Bestätigungstransaktionen des verteilten Datenbanksystems (z. B. in den Datenblöcken des verteilten Datenbanksystems).

Das Ausführungsbeispiel für ein Verfahren zum rechnergestützten Steuern von Geräten kann in einer Variante folgende Verfahrensschritte umfassen:
- beispielsweise ein Zuordnen von Markierungsdatensatzen, wobei
   - beispielsweise jeweils einer der Markierungsdatensätze Steuerbefehlen anhand von Ausführungsanforderungen zugeordnet wird, wenn entsprechende Steuerbefehle die Ausführungsanforderungen erfüllen,
   - beispielsweise die Steuerbefehle, denen einer der jeweiligen Markierungsdatensatz zugeordnet ist, durch Knoten eines verteilten Datenbanksystems (BC) oder durch Geräte ausführbar sind, wobei
   - beispielsweise in den Ausführungsanforderungen gerätespezifische Anforderungen und/oder vorausgesetzte Steuerbefehle gespeichert sind;
- beispielsweise ein Speichern der jeweiligen Steuerbefehle mit ihrem jeweils zugehörigen Markierungsdatensatz in Steuertransaktionen, wobei
   - beispielsweise die Steuertransaktionen in dem verteilten Datenbanksystems (BC) gespeichert werden;
   - beispielsweise die Steuertransaktionen mittels dem verteilten Datenbanksystems (BC) an die Geräte (D, BCN_D) oder Knoten (BCN, BCN_D) übertragen werden (z. B. mittels der Datenblöcke des verteilten Datenbanksystems in denen die Steuertransaktionen gespeichert sind)
- beispielsweise ein Überprüfen der jeweiligen Markierungsdatensätze für eine Ausführen der Steuerbefehle einer der Steuertransaktionen durch ein entsprechendes Gerät;
- beispielsweise ein Ausführen der Steuerbefehle durch das entsprechende Gerät abhängig von einem Ergebnis des Überprüfens;
- beispielsweise ein Speichern des Ergebnisses des Ausführens der Steuerbefehle in Bestätigungstransaktionen des verteilten Datenbanksystems (z. B. in den Datenblöcken des verteilten Datenbanksystems).

Im Einzelnen wird in diesem Ausführungsbeispiel ein Verfahren zum rechnergestützten Steuern von Geräten realisiert.

Das Verfahren umfasst einen ersten Verfahrensschritt 310 zum Zuordnen von Markierungsdatensatzen, wobei
- jeweils einer der Markierungsdatensätze Steuerbefehlen anhand von Ausführungsanforderungen zugeordnet wird, wenn entsprechende Steuerbefehle die Ausführungsanforderungen erfüllen,
- die Steuerbefehle, denen einer der jeweiligen Markierungsdatensatz zugeordnet ist, durch Knoten eines verteilten Datenbanksystems (BC) oder durch Geräte ausführbar sind, wobei
- in den Ausführungsanforderungen gerätespezifische Anforderungen und/oder vorausgesetzte Steuerbefehle gespeichert sind.

Dieser Verfahrensschritt kann zudem noch weitere Merkmale umfassen, die beispielsweise im Zusammenhang mit dem Markierungsmodul aus den vorhergehenden Ausführungsbeispielen offenbart wurden. Insbesondere kann dieser Verfahrensschritt beispielsweise eine Überprüfung der Ausführungsanforderungen umfassen, bei dem überprüft wird, ob die Geräte/Knoten die entsprechenden Steuerbefehle ausführen können bzw. für die Ausführung die entsprechenden Voraussetzungen erfüllt sind.

Das Verfahren umfasst einen zweiten Verfahrensschritt 320 zum Speichern der jeweiligen Steuerbefehle mit ihrem jeweils zugehörigen Markierungsdatensatz in Steuertransaktionen, wobei
- die Steuertransaktionen in dem verteilten Datenbanksystems (BC) gespeichert werden;
- die Steuertransaktionen mittels dem verteilten Datenbanksystems (BC) an die Geräte (D, BCN_D) oder Knoten (BCN, BCN_D) übertragen werden.

Das Übermitteln bzw. Übertragen erfolgt beispielsweise über das erste Kommunikationsnetzwerk mittels des verteilten Datenbanksystems, so wie dies in den vorherigen Ausführungsbeispielen erläutert wurde.

Das Verfahren umfasst einen dritten Verfahrensschritt 330 zum Überprüfen der jeweiligen Markierungsdatensätze für ein Ausführen der Steuerbefehle einer der Steuertransaktionen durch ein entsprechendes Gerät. Dies kann beispielsweise durch das entsprechende Gerät selbst erfolgen oder durch das verteilte Datenbanksystem erfolgen.

Das Überprüfen ergibt ein Ergebnis, das angibt, ob das entsprechende Gerät die Steuerbefehle ausführen kann Y oder nicht N.

Entsprechend umfasst das Verfahren einen vierten Verfahrensschritt zum Ausführen 340 der Steuerbefehle durch das entsprechende Gerät abhängig von einem Ergebnis des Überprüfens, wobei die Steuerbefehle der Steuertransaktion ausgeführt werden, wenn dies durch das (Prüf-)Ergebnis erlaubt bzw. bestätigt Y wurde.

Das Verfahren umfasst einen fünften Verfahrensschritt zum Speichern 350 des Ergebnisses des Ausführens der Steuerbefehle in Bestätigungstransaktionen der Datenblöcke des verteilten Datenbanksystems.

Stellt sich beim Überprüfen heraus bzw. gibt das Ergebnis an, dass die Steuerbefehle durch das entsprechende Gerät nicht ausgeführt werden dürfen N, wird ein sechster Verfahrensschritt 360 ausgeführt. Dieser kann beispielsweise die Ausführung der Steuerbefehle der Befehlsfolge abbrechen, indem beispielsweise ein Abbruch-Steuerbefehl für die Steuerbefehle der Befehlsfolge in einer Transaktion gespeichert wird, die wiederum in Blöcken der Blockkette gespeichert wird. Alternativ oder zusätzlich können diese oder weitere Steuerbefehle, die aus der Befehlsfolge resultiert sind, ganz oder teilweise abgebrochen werden oder für ungültig erklärt werden. Alternativ oder zusätzlich wird ein Ausführen/Abarbeiten der entsprechenden Steuerbefehle unterbunden.

Alternativ oder zusätzlich kann im sechsten Verfahrensschritt die Überprüfung neu gestartet werden und das Verfahren springt zu dem Verfahrensschritt drei zurück. Auf diese Weise kann beispielsweise ein Warten realisiert werden, bis beispielsweise ein entsprechender Markierungsdatensatz durch das verteilte Datenbanksystem bereitgestellt ist. Hierzu kann beispielsweise eine konfigurierbare Zeitverzögerung berücksichtigt werden, die insbesondere angibt wie lange es dauert bis zum dritten Verfahrensschritt zurückgesprungen wird. Alternativ oder zusätzlich kann das Warten bzw. die Wiederholung der Verfahrensschritte begrenzt werden, indem beispielsweise die Anzahl der Wiederholungen durch eine vorgegebene Wiederholungsanzahl begrenzt wird und/oder eine maximale Wartezeit angegeben wird. Werden die entsprechenden Werte (max. Wartezeit, Anzahl der Wiederholungen) überschritten, werden die entsprechenden Steuerbefehle nicht ausgeführt. Dies wird dann vorzugsweise in Transaktionen des verteilten Datenbanksystems dokumentiert.

Alternativ oder zusätzlich kann das Ergebnis auch im sechsten Verfahrensschritt in einer Bestätigungstransaktion in der Blockkette gespeichert werden (also in einem Block der Blocckette) .

Die einzelnen Verfahrensschritte können - so wie dies in den vorhergehenden Ausführungsbeispielen erläutert wurde - durch unterschiedliche Komponenten des Steuersystems realisiert werden. Dies sind beispielsweise das verteilte Datenbanksystem selbst und/oder die Geräte und/oder Knoten des verteilten Datenbanksystems.

Mittels der Erfindung (aus diesem Ausführungsbeispiel oder den vorhergehenden), lässt sich auf einfache Weise eine Befehlsfolge in Steuerbefehle bzw. Steuertransaktionen zerlegen, die dann durch entsprechend geeignete Geräte abgearbeitet werden. Dies wird sichergestellt durch die hohe Datenintegrität, die beispielsweise durch eine Blockkette erreicht wird (z. B. um einen Manipulationsschutz der abzuarbeitenden Steuerbefehle in den Steuertransaktionen zu erreichen). Dadurch, dass das Ergebnis der Abarbeitung der Steuerbefehle bzw. Steuertransaktionen in Bestätigungstransaktionen gespeichert wird, können die Geräte mit der Erfindung auch überwacht werden. Dabei können die Bestätigungstransaktionen auch Einzelheiten der Abarbeitung der Steuertransaktionen/Steuerbefehle umfassen. Dies sind z. B. Fertigungszeit oder Fertigungsprobleme, die bei dem Abarbeiten (z. B. der Fertigung eines Produktes) aufgetreten sind. Insofern kann eine Bestätigungstransaktion auch eine Information umfassen, dass die Abarbeitung der Steuerbefehle nicht erfolgreich war. Handelt es sich bei diesen nicht erfolgreich ausgeführten Steuerbefehlen um vorausgesetzte Steuerbefehle für andere/weitere Steuerbefehle, so würde insbesondere das Ergebnis des Überprüfens der Ausführungsanforderungen durch das Markierungsmodul für diese anderen/weiteren Steuerbefehle ergeben, dass diese anderen/weiteren Steuerbefehle durch ein/das entsprechendes Gerät nicht ausgeführt werden dürfen.

Sind jedoch die Ausführungsanforderungen für die anderen/weiteren Steuerbefehle erfüllt, so wird ein Markierungsdatensatz zugeordnet, der die Ausführung erlaubt.

Die Verfahrensschritte drei bis sechs (330 - 360) können je nach Implementierungsvariante optionale Verfahrensschritte sein.

Die Fig. 4 zeigt ein viertes Ausführungsbeispiel der Erfindung als Markierungsmodul 110.

Das Markierungsmodul 110 ist für ein verteiltes Datenbanksystem oder für ein Steuersystem mit einem verteilten Datenbanksystem zum Steuern und/oder Überwachen von Geräten oder für Geräte geeignet, die Steuerbefehle (z. B. im Form von Transaktionen) ausführen.

Das Markierungsmodul 110 umfasst eine erste Schnittstelle 410, eine erste Evaluierungseinheit 420 und optional einen Konfigurationsspeicher 430, die über einen Bus 401 vorzugsweise miteinander kommunikativ in Verbindung stehen. Ein Bus kann hierbei z. B. auch ein einfacher Programmfluss oder ein Datenaustausch zwischen den entsprechenden Komponenten sein.

Das Markierungsmodul kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über den Bus miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Die erste Schnittstelle 410 ist zum Empfangen oder Abrufen von Steuerbefehlen eingerichtet. Die Steuerbefehle können dabei z. B. von einem Nutzer mittels einer GUI an die erste Schnittstelle 410 übermittelt werden. Die Steuerbefehle können aber auch durch einen Server oder eine andere Datenbank bereitgestellt werden. Dies kann beispielsweise wieder ein verteiltes Datenbanksystem sein oder eine hierarchische Datenbank sein. Sollte das Markierungsmodul beispielsweise in einem erfindungsgemäßen Steuersystem eingesetzt werden, so können die Steuerbefehle oder eine Befehlsfolge dem Steuersystem auf die gleiche Weise übermittelt werden, so wie dies in diesem Ausführungsbeispiel beschrieben wird.

Die Steuerbefehle können beispielsweise auch von einem Zerlegemodul, so wie es in den vorhergehenden Ausführungsbeispielen erläutert wurde, bereitgestellt werden. Das Zerlegemodul empfängt oder ruft hierzu die Steuerbefehle oder Befehlsfolgen ab.

Die Steuerbefehle oder Befehlsfolgen können dabei z. B. von einem Nutzer mittels einer GUI und beispielsweise über eine zweite Schnittstelle oder die erste Schnittstelle 410, an das erste Zerlegemodul übermittelt werden. Die Steuerbefehle oder die Befehlsfolgen können aber auch durch einen Server oder eine andere Datenbank dem Zerlegemodul bereitgestellt werden. Dies kann beispielsweise wieder ein verteiltes Datenbanksystem sein oder eine hierarchische Datenbank sein.

Die erste Evaluierungseinheit 420 ist zum Zuordnen von Markierungsdatensätzen eingerichtet, wobei
- jeweils einer der Markierungsdatensätze den jeweiligen Steuerbefehlen anhand von Ausführungsanforderungen zugeordnet wird, wenn entsprechende Steuerbefehle die Ausführungsanforderungen erfüllen,
- die Steuerbefehle, denen einer der jeweiligen Markierungsdatensatz zugeordnet ist, durch Knoten eines verteilten Datenbanksystems oder durch Geräte ausführbar sind, wobei
- in den Ausführungsanforderungen gerätespezifische Anforderungen und/oder vorausgesetzte Steuerbefehle gespeichert sind;

Der Konfigurationsspeicher umfasst die gerätespezifischen Daten über die Geräte und/oder gerätespezifische Daten über die Knoten und/oder die gerätespezifische Anforderungen und/oder die Ausführungsanforderungen. Wie bereits erläutert können die Ausführungsanforderungen vorgegeben sein (z. B. durch die Steuerbefehle selbst oder durch eine Policy) oder die Ausführungsanforderungen werden berechnet anhand der Steuerbefehle.

Das Markierungsmodul ist dahingehend vorteilhaft, um insbesondere die Ausführung von Steuerbefehlen von Geräten oder Knoten (z. B. Fertigungsroboter, Steuersysteme für ein Energieverteilungsnetzwerk, Bankterminals, Geldautomaten, Transfers zwischen Banken) zu verbessern, die über ein Netzwerk miteinander verbunden sind.

Zusätzlich kann beispielsweise die Sicherheit beim Betreiben einer verteilten Infrastruktur (z. B. ein verteiltes Datenbanksystem mit Geräten und/oder Knoten oder Knoten/Geräte die auf das verteilte Datenbanksystem zugreifen) erhöht werden, die ganz oder teilweise mittels eines verteilten Datenbanksystems (z. B. einer Blockkette) implementiert ist. Insbesondere ist der Begriff Steuerbefehle breit zu verstehen. Hierbei kann es sich beispielsweise zusätzlich zu der oben genannten Definition auch um Transaktionen handeln, die durch ein Gerät (z. B. einen Knoten einer Blockkette oder ein Gerät außerhalb der Blockkette, z. B. Gerät D) ausgeführt werden sollen. Mit anderen Worten werden durch die Vorrichtung insbesondere ungeprüfte Transaktionen in geprüfte Transaktionen konvertiert, wobei die Prüfung beispielsweise anhand der gerätespezifischen Anforderungen und gerätespezifischen Daten erfolgt (also den Ausführungsanforderungen), welche die Steuerbefehle ausführen sollen.

Mittels der Erfindung können beispielsweise geforderte gerätespezifische Anforderungen für die Ausführung der Steuerbefehle am Gerät sichergestellt bzw. überprüft werden. Dabei können die gerätespezifischen Anforderungen beispielsweise auch Sicherheitsanforderungen und/oder ortsbezogene Anforderungen (z. B. eine Länderangabe, eine GPS-Angabe oder PLZ) sein, die ein Gerät für die Ausführung der Steuerbefehle erfüllen soll. Oder es kann beispielsweise noch eine bestimmte/vorgegebene Authentisierung und/oder Authentifizierung durch die gerätespezifischen Anforderungen für die Ausführung gefordert werden.

Die gerätespezifischen Anforderungen für Knoten oder Geräte können beispielsweise auch nutzerbezogen sein oder nutzerspezifische Anforderungen umfassen. Beispielsweise kann ein erster Nutzer in den ihm zugeordneten gerätespezifischen Anforderungen eine niedrige Präzision bei der Fertigung eines Werkstückes fordern. Beispielsweise kann dann ein zweiter Nutzer in den ihm zugeordneten gerätespezifischen Anforderungen eine höhere Präzision bei der Fertigung eines Werkstückes fordern. Auf diese Weise können auch Sicherheitsanforderungen nutzerbezogen gespeichert werden. Es ist beispielsweise auch denkbar, dass bestimmten Typen oder Arten von Steuerbefehlen - nutzerbezogen oder nicht - gerätespezifische Anforderungen zugeordnet sind, die durch das Markierungsmodul berücksichtigt werden. Beispielsweise kann gefordert sein, dass ein Steuerbefehl zum Aufspielen einer Firmware nur durch ein Gerät erfolgt, das vorgegebene Sicherheitsanforderungen erfüllt, um z. B. sicherzustellen, dass nicht ohne weiteres Know-How der Firmware für jeden in einer Fertigungsanlage zugängig ist. Durch diese vorgegebenen Sicherheitsanforderungen kann beispielsweise gefordert sein, dass nur bestimmtes Personal einen Zugriff auf ein entsprechendes Gerät hat oder das Gerät durch ein Passwort und/oder anderen kryptographischen Mechanismen geschützt ist (z. B. Zugriff ist nur durch Einstecken einer Chipkarte und Eingeben einer Pin möglich).

Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert (z. B. bei seiner Heimatbank oder beim Onlinebanking), dass er vorzugsweise nur in vorgegebenen Ländern, z. B. Italien, Frankreich und Österreich, eine Bargeldauszahlung erlaubt, so wird dies in den gerätespezifischen Anforderungen gespeichert, die vorzugsweise einem bestimmten Nutzer zugeordnet sind. Ein Geldautomat in Andorra würde dann ggf. keine Auszahlung erlauben bzw. diese unterbinden. Auch kann beispielsweise durch die Sicherheitsanforderungen eine vorgegebene Authentifizierung des Kunden gefordert sein. Beispielsweise, dass ein Pin für eine Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator). Auf ähnliche Weise kann beispielsweise ein Aufladen einer Geldkarte realisiert sein, wobei z. B. die gerätespezifischen Anforderungen für die Geldkarte und das Gerät zum Aufladen Sicherheitsanforderungen vorgeben. Beispielsweise müssen die Geldkarte oder das Gerät zum Aufladen vorgegebene kryptographische Verfahren und/oder Authentifizierungsverfahren nutzen bzw. über die verfügen, um den Aufladevorgang durch zu führen.

Alternativ oder zusätzlich kann die (erste) Evaluierungseinheit die Steuerbefehle auch weiter analysieren oder umfangreicher analysieren. Wenn beispielsweise die Evaluierungseinheit bereits feststellt, dass die gerätespezifischen Anforderungen nicht erfüllt sind oder nicht erfüllbar sind (z. B. die Steuerbefehle wurden aus einem nicht freigegebenen Land geschickt oder sind für die Ausführung in einem nicht freigegebenen Land gedacht), kann z. B. die (erste) Evaluierungseinheit eine Steuertransaktion erstellen, die das entsprechende Gerät, Knoten oder das System auf die Nicht-Ausführbarkeit hinweist und vorzugsweise eine Ausführung der Steuerbefehle unterbindet bzw. verbietet. Alternativ kann beispielsweise auch keine Steuertransaktion erzeugt werden und es gibt irgendwann einen Timeout für die Ausführung der Steuerbefehle, z. B. nach einem vorgegebenen Zeitraum.

Um dies festzustellen, vergleicht die (erste) Evaluierungseinheit die gerätespezifischen Daten für das Gerät, das die Steuerbefehle ausführen soll, mit den gerätespezifischen Anforderungen z. B. für die Steuerbefehle. Abhängig vom Ergebnis dieses Vergleichens wird dann entweder eine Steuertransaktion erzeugt, die eine Ausführung der Steuerbefehle auf dem entsprechenden Gerät erlaubt, oder es wird keine Steuertransaktion erstellt oder es wird eine Steuertransaktion erstellt, die eine Ausführung der Steuerbefehle verbietet bzw. unterbindet. Alternativ oder zusätzlich können diese Informationen auch in einem Markierungsdatensatz gespeichert werden. Hierzu kann der Markierungsdatensatz z. B. den Wert -1 umfassen, der angibt, dass die Ausführung nicht erlaubt ist, den Wert 0 umfassen, der angibt, dass eine Ausführung nicht möglich ist oder den Wert 1 umfassen, der angibt, das die Ausführung erlaubt bzw. möglich ist. Entsprechend kann auch nicht ausführbaren Steuerbefehlen ein Markierungsdatensatz zugeordnet werden, der angibt ob entsprechende Steuerbefehle ausführbar sind oder nicht.

Stellt die (erste) Evaluierungseinheit anhand der Ausführungsanforderungen fest, dass die Steuerbefehle ausführbar sind (der Vergleich also positiv ist), werden den entsprechenden Steuerbefehlen ein entsprechender Markierungsdatensatz zugeordnet, der angibt, dass die Steuerbefehle ausgeführt werden dürfen. Dies kann z. B. durch ein erstes Zuordnungsmodul erfolgen, das z. B. eine integrale Komponente des Markierungsmoduls ist oder eine integrale Komponente der Evaluierungseinheit ist.

Danach werden die Steuerbefehle ggf. zusammen mit dem zugehörigen Markierungsdatensatz beispielsweise an ein erstes Speichermodul des Markierungsmoduls übermittelt. Diese Übermittlung kann beispielsweise durch das Zuordnungsmodul, die (erste) Evaluierungseinheit oder das Markierungsmodul selbst erfolgen.

Das erste Speichermodul ist zum Speichern der jeweiligen Steuerbefehle in Steuertransaktionen eingerichtet, wobei die Steuerbefehle beispielsweise zusammen mit dem zugeordneten Markierungsdatensatz in den Steuertransaktionen gespeichert werden, wenn die Steuerbefehle durch eines der Geräte (z. B. einem Geldautomat) Gerät ausführbar sind.

Mit anderen Worten wird beispielsweise abhängig von Ergebnis des Vergleichens festlegt, ob eine Steuertransaktion gespeichert wird und/oder mit welchem Inhalt eine Steuertransaktion gespeichert wird.

Zum Speichern können die Steuertransaktionen dann in Datenblöcken (B) des verteilten Datenbanksystems (BC) gespeichert werden, wobei insbesondere die Steuertransaktionen mittels der Datenblöcke (B) an die Geräte (D, BCN_D) oder die Knoten übertragen werden - sofern eine Steuertransaktion erstellt wurde.

Zusätzlich kann das Markierungsmodul 110 beispielsweise noch ein erstes Zuordnungsmodul und/oder ein erstes Speichermodul und/oder weitere Module umfassen, so wie dies in den Ausführungsbeispielen erläutert wurde. Die Knoten oder Geräte können dann beispielsweise ein Überprüfungsmodul und/oder ein Ausführungsmodul umfassen, so wie dies in den Ausführungsbeispielen erläutert wurde.

Es wäre beispielsweise auch denkbar, dass Online-Banking auf die oben genannte Weise abgesichert wird, indem Sicherheitsanforderungen und/oder ortsbezogene Anforderungen des Rechners (also das Gerät, das Steuerbefehle verschickt) überprüft werden und, um festzustellen, ob die Auszahlung oder Überweisung durch ein anderes Gerät erlaubt ist. Hierzu kann beispielsweise dieser Rechner ein Knoten des verteilten Datenbanksystems sein oder ein Gerät - so wie dies bereits erläutert wurde.

Die Fig. 5 zeigt ein fünftes Ausführungsbeispiel der Erfindung als Ablaufdiagramm eines erfindungsgemäßen Verfahrens.

Das Verfahren ist vorzugsweise rechnergestützt realisiert.

Im Einzelnen wird in diesem Ausführungsbeispiel ein Verfahren zum rechnergestützten Markieren von Steuerbefehlen realisiert. Das Verfahren kann beispielsweise auch verwendet werden, um die Ausführbarkeit von Steuerbefehlen zu ermitteln, so wie dies beispielsweise in Fig. 4 erläutert ist.

Das Verfahren umfasst einen ersten Verfahrensschritt 510 zum Empfangen oder Abrufen von Steuerbefehlen.

Das Verfahren umfasst einen zweiten Verfahrensschritt 520 Zuordnen von Markierungsdatensätzen, wobei
- jeweils einer der Markierungsdatensätze den Steuerbefehlen anhand von Ausführungsanforderungen zugeordnet wird, wenn entsprechende Steuerbefehle die Ausführungsanforderungen erfüllen,
- die Steuerbefehle, denen einer der jeweilige Markierungsdatensätze zugeordnet ist, durch Knoten eines verteilten Datenbanksystems oder durch Geräte ausführbar sind,
- in den Ausführungsanforderungen gerätespezifische Anforderungen und/oder vorausgesetzte Steuerbefehle gespeichert sind.

Beispielsweise wird geprüft, ob ein Gerät die gerätespezifischen Anforderungen erfüllt, indem für das entsprechende Gerät die gerätespezifischen Daten überprüft werden.

In den Ausführungsanforderungen sind dabei bzw. werden die gerätespezifische Anforderungen und/oder die vorausgesetzten Steuerbefehle gespeichert. Das verteilte Datenbanksystem ist dabei beispielsweise eine Blockkette.

Die Knoten oder die Geräte sind dabei z. B. mittels des verteilten Datenbanksystems verbunden.

Zum Überprüfen der Ausführbarkeit der Steuerbefehle werden z. B. de Ausführungsanforderungen überprüft. Hierzu werden die gerätespezifischen Anforderungen oder vorausgesetzten Steuerbefehle analysiert und mit den bereits ausgeführten Steuerbefehlen und gerätespezifischen Anforderungen für verfügbare Geräte verglichen. Beispielsweise kann in diesem Schritt auch mittels des Markierungsdatensatzes eine spezifische Zuweisung bzw. Zuordnung eines spezifischen Knotens oder eines spezifischen Gerätes erfolgen, das die Steuerbefehle ausführen soll. Damit werden insbesondere die Zuverlässigkeit und die Sicherheit der Ausführung verbessert bzw. sichergestellt, dass die Ausführung z. B. das gewünschte Resultat erzeugt. Dies ist z. B., dass ein Produkt mit der erforderlichen Präzision gefertigt wurde.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

### Literatur

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, Stand 14.03.2018 https://blockchainhub.net/blockchain-oracles/
[9] Joseph Poon, Thaddeus Dryja: The Bitcoin Lightning Network: Scalable Off-Chain Instant Payments. 14. Januar 2016, abgerufen am 30. Juni 2018 (PDF; 3 MB, englisch).

## Patentansprüche

1. Steuersystem zum Steuern und/oder Überwachen von Geräten, umfassend:
- ein verteiltes Datenbanksystem (BC) oder ein verteiltes Kommunikationssystem;
- ein erstes Markierungsmodul (110) zum Zuordnen von Markierungsdatensätzen, wobei
- jeweils einer der Markierungsdatensätze Steuerbefehlen anhand von Ausführungsanforderungen zugeordnet wird, wenn entsprechende Steuerbefehle die Ausführungsanforderungen erfüllen,
- die Steuerbefehle, denen einer der jeweiligen Markierungsdatensatz zugeordnet ist, durch Knoten (BCN, BCN_D) des verteilten Datenbanksystems (BC) oder des verteilten Kommunikationssystems oder durch Geräte (D, BCN_D) ausführbar sind,
- in den Ausführungsanforderungen gerätespezifische Anforderungen und/oder vorausgesetzte Steuerbefehle gespeichert sind;
- ein erstes Speichermodul (130) zum Speichern der jeweiligen Steuerbefehle mit ihrem jeweils zugehörigen Markierungsdatensatz in Steuertransaktionen, wobei
- die Steuertransaktionen in dem verteilten Datenbanksystem (BC) oder durch das verteilte Kommunikationssystem gespeichert werden;
- die Steuertransaktionen mittels des verteilten Datenbanksystems (BC) oder des verteilten Kommunikationssystems an die Geräte (D, BCN_D) oder Knoten (BCN, BCN_D) übertragen werden.

2. Steuersystem nach Anspruch 1, wobei die vorausgesetzten Steuerbefehle bereits ausgeführte Steuerbefehle sind, für die eine Bestätigung über deren Ausführung in Bestätigungstransaktionen des verteilten Datenbanksystems gespeichert sind.

3. Steuersystem nach einem der vorhergehenden Ansprüche, wobei
- das verteilte Datenbanksystem das verteilte Kommunikationssystem ist oder eine Blockkette ist und die Blockkette Datenblöcke umfasst,
- die Datenblöcke Blöcke der Blockkette sind.

4. Steuersystem nach einem der vorhergehenden Ansprüche, wobei
- die Markierungsdatensätze eindeutige Identifizierer für die Geräte und/oder Knoten umfassen, welche die entsprechenden Steuerbefehle ausführen sollen.

5. Steuersystem nach einem der vorhergehenden Ansprüche, wobei Datenblöcke über eine kryptographische Hashfunktion (H) miteinander verkettet sind.

6. Steuersystem nach einem der vorhergehenden Ansprüche, wobei das Steuersystem ein erstes Überprüfungsmodul und/oder ein erstes Ausführungsmodul und/oder ein zweites Speichermodul umfasst.

7. Steuersystem nach einem der vorhergehenden Ansprüche, wobei
- das Steuersystem oder das Markierungsmodul (110) ein Aktivitätsmodul umfasst,
- das Aktivitätsmodul dazu eingerichtet ist, die Aktivität der Vorrichtung und/oder des Markierungsmoduls anzuzeigen oder zu dokumentieren.

8. Gerät umfassend:
- ein erstes Kommunikationsmodul, wobei das erstes Kommunikationsmodul zum Empfangen Steuertranskationen von einem verteilten Datenbanksystem eingerichtet ist, wobei
- die Steuertransaktionen mit Steuerbefehlen für das Gerät in dem des verteilten Datenbanksystems gespeichert sind,
- die Steuertransaktionen den Steuerbefehlen zugeordnete Markierungsdatensätze umfassen;
- ein erstes Überprüfungsmodul, das erste Überprüfungsmodul zum Überprüfen der jeweiligen Markierungsdatensätze für ein Ausführen der Steuerbefehle einer der Steuertransaktionen durch ein entsprechendes Gerät eingerichtet ist;
- ein erstes Ausführungsmodul, wobei das erste Ausführungsmodul zum Ausführen der Steuerbefehle durch das entsprechende Gerät abhängig von einem Ergebnis des Überprüfens eingerichtet ist.

9. Verfahren zum rechnergestützten Steuern von Geräten mit folgenden Verfahrensschritten:
- Zuordnen von Markierungsdatensätzen, wobei
- jeweils einer der Markierungsdatensätze Steuerbefehlen anhand von Ausführungsanforderungen zugeordnet wird, wenn entsprechende Steuerbefehle die Ausführungsanforderungen erfüllen,
- die Steuerbefehle, denen einer der jeweiligen Markierungsdatensatz zugeordnet ist, durch Knoten eines verteilten Datenbanksystems (BC) oder eines verteilten Kommunikationssystems oder durch Geräte ausführbar sind, wobei
- in den Ausführungsanforderungen gerätespezifische Anforderungen und/oder vorausgesetzte Steuerbefehle gespeichert sind;
- Speichern der jeweiligen Steuerbefehle mit ihrem jeweils zugehörigen Markierungsdatensatz in Steuertransaktionen, wobei
- die Steuertransaktionen in dem verteilten Datenbanksystem (BC) oder durch das verteilte Kommunikationssystem gespeichert werden;
- die Steuertransaktionen mittels des verteilten Kommunikationssystems oder des verteilten Datenbanksystems (BC) an die Geräte (D, BCN_D) oder Knoten (BCN, BCN_D) übertragen werden.

10. Computerprogrammprodukt mit Programmbefehlen zur Durchführung des Verfahrens nach Anspruch 9.

11. Bereitstellungsvorrichtung für das Computerprogrammprodukt nach Anspruch 10, wobei die Bereitstellungsvorrichtung das Computerprogrammprodukt speichert und/oder bereitstellt.

## Claims

1. Control system for controlling and/or monitoring devices, comprising:
- a distributed database system (BC) or a distributed communication system;
- a first marking module (110) for assigning marking data records, wherein
- in each case one of the marking data records is assigned to control instructions on the basis of execution requirements if applicable control instructions meet the execution requirements,
- the control instructions to which one of the respective marking data records is assigned can be executed by nodes (BCN, BCN_D) of the distributed database system (BC) or of the distributed communication system or by devices (D, BCN_D),
- device-specific requirements and/or presupposed control instructions are stored in the execution requirements,
- a first memory module (130) for storing the respective control instructions with their respectively associated marking data record in control transactions, wherein
- the control transactions are stored in the distributed database system (BC) or by the distributed communication system;
- the control transactions are transmitted to the devices (D, BCN_D) or nodes (BCN, BCN_D) by means of the distributed database system (BC) or the distributed communication system.

2. Control system according to Claim 1, wherein the presupposed control instructions are already executed control instructions for which a confirmation of the execution thereof is stored in confirmation transactions of the distributed database system.

3. Control system according to either of the preceding claims, wherein
- the distributed database system is the distributed communication system or is a blockchain and the blockchain comprises data blocks;
- the data blocks are blocks of the blockchain.

4. Control system according to one of the preceding claims, wherein
- the marking data records comprise unique identifiers for the devices and/or nodes that are supposed to execute the applicable control instructions.

5. Control system according to one of the preceding claims, wherein data blocks are concatenated with one another via a cryptographic hash function (H).

6. Control system according to one of the preceding claims, wherein the control system comprises a first checking module and/or a first execution module and/or a second memory module.

7. Control system according to one of the preceding claims, wherein
- the control system or the marking module (110) comprises an activity module,
- the activity module is configured to display or document the activity of the apparatus and/or of the marking module.

8. Device comprising:
- a first communication module, wherein the first communication module is configured to receive control transactions from a distributed database system, wherein
- the control transactions with control instructions for the device are stored in the distributed database system,
- the control transactions comprise marking data records assigned to the control instructions;
- a first checking module, wherein the first checking module is configured to check the respective marking data records for an execution of the control instructions of one of the control transactions by an applicable device;
- a first execution module, wherein the first execution module is configured to execute the control instructions by means of the applicable device on the basis of a result of the checking.

9. Method for the computer-aided control of devices, having the following method steps:
- assigning marking data records, wherein
- in each case one of the marking data records is assigned to control instructions on the basis of execution requirements if applicable control instructions meet the execution requirements,
- the control instructions to which one of the respective marking data records is assigned can be executed by nodes of a distributed database system (BC) or of a distributed communication system or by devices, wherein
- device-specific requirements and/or presupposed control instructions are stored in the execution requirements;
- storing the respective control instructions with their respectively associated marking data record in control transactions, wherein
- the control transactions are stored in the distributed database system (BC) or by the distributed communication system;
- the control transactions are transmitted to the devices (D, BCN_D) or nodes (BCN, BCN_D) by means of the distributed communication system or the distributed database system (BC).

10. Computer program product having program instructions for performing the method according to Claim 9.

11. Providing apparatus for the computer program product according to Claim 10, wherein the providing apparatus stores and/or provides the computer program product.

## Revendications

1. Système de commande pour le contrôle et/ou la surveillance d'appareils, comprenant :
- un système de base de données distribué (BC) ou un système de communication distribué ;
- un premier module de marquage (110) pour l'attribution d'ensembles de données de marquage, dans lequel
- un des ensembles de données de marquage est attribué à des instructions de commande à l'aide d'exigences d'exécution, lorsque les instructions de commande correspondantes respectent les exigences d'exécution,
- les instructions de commande auxquelles est attribué un des ensembles de données respectifs sont exécutables par des nœuds (BCN, BCN_D) du système de base de données distribué (BC) ou du système de communication distribué ou par des appareils (D, BCN_D),
- dans les exigences d'exécution sont enregistrées des exigences spécifiques aux appareils et/ou des instructions de commande prédéterminées ;
- un premier module de mémoire (130) pour l'enregistrement des instructions de commande respectives avec leur ensemble de données correspondant dans des transactions de commande, dans lequel
- les transactions de commande sont enregistrées dans le système de base de données distribué (BC) ou par le système de communication distribué ;
- les transactions de commande sont transmises, au moyen du système de base de données distribué (BC) ou du système de communication distribué, aux appareils (D, BCN_D) ou aux nœuds (BCN, BCN_D).

2. Système de commande selon la revendication 1, dans lequel les instructions de commande prédéterminées sont des instructions de commande déjà exécutées pour lesquelles une confirmation concernant leur exécution est enregistrée dans des transactions de confirmation du système de base de données distribué.

3. Système de commande selon l'une des revendications précédentes, dans lequel
- le système de base de donnée distribué est le système de communication distribué ou est une chaîne de blocs et la chaîne de blocs comprend des blocs de données,
- les blocs de données sont des blocs de la chaîne de blocs.

4. Système de commande selon l'une des revendications précédentes, dans lequel
- les ensembles de données de marquage comprennent des identifiants uniques pour les appareils et/ou les nœuds, qui doivent exécuter les instructions de commande correspondantes.

5. Système de commande selon l'une des revendications précédentes, dans lequel des blocs de données sont concaténés entre eux par l'intermédiaire d'une fonction de hachage cryptographique (H).

6. Système de commande selon l'une des revendications précédentes, dans lequel le système de commande comprend un premier module de vérification et/ou un premier module d'exécution et/ou un deuxième module de mémoire.

7. Système de commande selon l'une des revendications précédentes, dans lequel
- le système de commande ou le module de marquage (110) comprend un module d'activité,
- le module d'activité est conçu pour afficher ou documenter l'activité du dispositif et/ou du module de marquage.

8. Appareil comprenant :
- un premier module de communication, dans lequel le premier module de communication est conçu pour la réception de transactions de commande par un système de base de données distribué, dans lequel
- les transactions de commande sont enregistrées avec des instructions de commande pour l'appareil dans celui du système de base de données distribué,
- les transactions de commande comprennent des ensembles de données de marquage attribuées aux instructions de commande ;
- un premier module de vérification, le premier module de vérification est conçu pour la vérification des ensembles de données de marquage pour une exécution des instructions de commande d'une des transactions de commande par un appareil correspondant ;
- un premier module d'exécution, dans lequel le premier module d'exécution est conçu pour l'exécution des instructions de commande par l'appareil correspondant en fonction d'un résultat de la vérification.

9. Procédé de commande assistée par ordinateur d'appareils avec les étapes suivantes :
- attribution d'ensembles de données de marquage, dans lequel
- un des ensembles de données de marquage est attribué à des instructions de commande à l'aide d'exigences d'exécution, lorsque les instructions de commande correspondantes respectent les exigences d'exécution,
- les instructions de commande auxquelles est attribué un des ensembles de données respectifs sont exécutables par des nœuds du système de base de données distribué (BC) ou du système de communication distribué ou par des appareils,
- dans les exigences d'exécution sont enregistrées des exigences spécifiques aux appareils et/ou des instructions de commande prédéterminées ;
- enregistrement des instructions de commande respectives avec leur ensemble de données correspondant dans des transactions de commande, dans lequel
- les transactions de commande sont enregistrées dans le système de base de données distribué (BC) ou par le système de communication distribué ;
- les transactions de commande sont transmises, au moyen du système de base de données distribué (BC) ou du système de communication distribué, aux appareils (D, BCN_D) ou aux nœuds (BCN, BCN_D).

10. Produit de programme informatique avec des instructions de programme pour l'exécution du procédé selon la revendication 9.

11. Dispositif de mise à disposition pour le programme informatique selon la revendication 10, dans lequel le dispositif de mise à disposition enregistre et/ou met à disposition le produit de programme informatique.
